# EUROPÄISCHE PATENTSCHRIFT

(11) **EP 3 620 247 B1**
(45) Veröffentlichungstag und Bekanntmachung des Hinweises auf die Patenterteilung: **13.01.2021**
(21) Anmeldenummer: 18193434.0
(22) Anmeldetag: 10.09.2018
(51) Int. Cl.: B23B 31/16, B23B 31/177, B23B 31/12

(54) **HOCHPRÄZISIONSSPANNFUTTER**
HIGH PRECISION CHUCK
MANDRIN DE SERRAGE HAUTE PRÉCISION

(43) Veröffentlichungstag der Anmeldung: 11.03.2020
(73) Patentinhaber: SwissChuck AG, 8307 Effretikon (CH)
(72) Erfinder: Bohler, Erwin, 9553 Bettwiesen (CH); Petito, Martin, 8305 Dietlikon (CH)
(74) Vertreter: Keller Schneider Patent- und Markenanwälte AG (Bern)

(56) Entgegenhaltungen:
- EP-A1- 2 777 848
- DE-C- 162 425
- GB-A- 612 855

## Beschreibung

### Technisches Gebiet

Die Erfindung betrifft ein Spannfutter gemäß dem Oberbegriff des Anspruchs 1, d.h. ein Spannfutter zum Einspannen von Werkzeugen und/oder Werkstücken in einer Werkzeugmaschine, insbesondere in einer Werkzeugschleifmaschine, umfassend einen Basiskörper, sowie mehrere Spannbolzen, welche mit ihren vorderen Enden eine Spannstelle definieren und in einem gegenüber dem Basiskörper beweglichen Futterkörper geführt sind, und wobei die Spannbolzen in Bezug auf die vorgesehene Drehachse des Spannfutters schräg eingebaut sind und der Futterkörper so ausgelegt ist, dass durch eine Bewegung des Futterkörpers in axialer Richtung eine Bewegung der Spannbolzen in radialer Richtung bewirkt wird, so dass die Spannstelle geöffnet und geschlossen werden kann, wobei sich eine axiale Position der vorderen Enden und/oder freien Stirnflächen der Spannbolzen nicht ändert Ein solches Spannfutter ist aus GB 612 855 A bekannt.

### Stand der Technik

Werkzeugmaschinen dienen der Bearbeitung oder Fertigung von Werkstücken mit Werkzeugen. Zu den wichtigsten Vertretern zählen unter anderem Schleif-, Dreh- und Fräsmaschinen.

Schleifmaschinen werden eingesetzt zur schleifenden Bearbeitung von Werkstücken und/oder Werkzeugen. Werkzeugschleifmaschinen werden beispielsweise z.B. zum Schleifen und/oder Schärfen von Werkzeugen, wie Bohrern, Fräswerkzeugen und/oder Drehwerkzeugen eingesetzt. Schleifmaschinen zum Bearbeiten runder Werkstücke werden auch als Rundschleifmaschinen bezeichnet.

Drehmaschinen sind speziell für das Fertigungsverfahren Drehen ausgelegt und ermöglichen beispielsweise die Herstellung oder Bearbeitung rotationssymmetrischer Werkstücke. Auf Drehmaschinen kann aber auch gebohrt werden, sofern die Mitte der Bohrung mit der Drehachse zusammenfällt. Manche Drehmaschinen besitzen auch Zusatzeinrichtungen zum Fräsen oder Stossen.

Die Werkstücke und/oder die Werkzeuge werden bei Werkzeugmaschinen üblicherweise in Spannfuttern gehalten, welche typischerweise an eine Antriebspindel gekoppelt sind.

Als Spannfutter werden allgemein Vorrichtungen bezeichnet, die bei Werkzeugmaschinen, das zu bearbeitende Werkstück oder die Werkzeuge wie Bohrer oder Fräser aufnehmen.

Die EP 2 777 848 A1 (Schunk GmbH & Co. KG Spann- und Greiftechnik) beschreibt in diesem Zusammenhang Spann- und Greifeinrichtungen, welche insbesondere als Präzisions-Spannfutter zum Schleifen von Werkzeugen ausgelegt sind. Die Spann- oder Greifeinrichtung besteht aus einem Grundkörper aus einem formsteifen Material, mehreren schräg eingebauten Spannbacken, die an dem Grundkörper radial in Bezug auf die Drehachse bewegbar gehalten sind, und einem zumindest teilweise hohl ausgebildeten Spannkolben, welcher an dem Grundkörper axial zwischen einer hinteren und einer vorderen Endstellung bewegbar gehalten ist. Die Spannbacken und der Spannkolben sind dabei derart gekoppelt, dass eine Axialbewegung des Spannkolbens in eine Radialbewegung der Spannbacken umgesetzt wird. Zudem ragt vom Grundkörper ein koaxial zur Längsachse positionierter Führungszapfen ab, an dessen Aussenseite der Spannkolben axial bewegbar geführt ist. Weiter können die Spannbacken mit ihren hinteren Stirnflächen an einer senkrecht zur Längsachse liegenden Kontaktfläche des Grundkörpers anliegen, um die Spannbacken in axialer Richtung an der Anlagefläche zu sichern. Dies erfolgt insbesondere mit einer einseitig im Spannbacken ausgebildeten Nut, in welche ein Haltesteg eingreift. Die Spannbacken sind durchwegs als vollständig flächige und eckige Formkörper ausgebildet, welche Längsführungsnuten und Fasen aufweisen.

Die GB 612,855 A (Ulvsunda Verkst Er Aktiebolag) beschreibt ein Spannfutter mit mehreren Spannbolzen, welche durch ein axial verschiebbares Teil justiert werden können. In einem Futterkopf sind dabei drei Spannbolzen in schräg nach aussen gerichteten Bohrungen verschiebbar angeordnet, wobei bei einer Verschiebung des verschiebbaren Teils in axialer Richtung die Spannbolzen in radialer Richtung nach innen oder aussen bewegt werden.

Bekannte Spannsysteme verfügen jedoch meist nur über eine limitierte Spannpräzision und/oder deren Herstellung und Wartung ist sehr aufwändig.

Es besteht daher nach wie vor Bedarf nach verbesserten Lösungen, welche die oben genannten Nachteile in geringerem Mass oder gar nicht aufweisen.

### Darstellung der Erfindung

Aufgabe der Erfindung ist es, eine dem eingangs genannten technischen Gebiet zugehörendes Spannsystem zum zentrischen Spannen von Werkzeugen und/oder Werkstücken in einer Werkzeugmaschine zu schaffen, mit welcher eine möglichst hohe Spannpräzision erreicht werden kann. Dies im Besonderen bei möglichst geringem Herstell- und Wartungsaufwand.

Die Lösung der Aufgabe ist durch die Merkmale des Anspruchs 1 definiert. Gemäss der Erfindung sind die Spannbolzen zumindest in den Bereichen, in welchen sie im Futterkörper geführt werden, im Wesentlichen kreiszylindrisch ausgebildet und die hinteren Stirnflächen der Spannbolzen liegen stets an einer senkrecht zur Drehachse des Spannfutters liegenden Kontaktfläche am Basiskörper an und werden mittels einer Rückhaltevorrichtung in radialer Richtung verschiebbar gehalten, wobei die Rückhaltevorrichtung derart ausgebildet ist, dass wenigstens ein Spannbolzen mit einer Vorspannkraft in axialer Richtung an die Kontaktfläche gedrückt wird.

Die "Axialbewegung" bezieht sich im vorliegenden Zusammenhang stets auf eine Bewegung entlang oder parallel der vorgesehenen Drehachse des Spannfutters. Entsprechend bezieht sich der Begriff "axial" auf die Drehachse oder eine dazu parallele Achse. Sinngemäss wird unter "Radialbewegung" eine Bewegung senkrecht zur vorgesehenen Drehachse des Spannfutters verstanden und der Begriff "radial" bezieht sich auf eine senkrecht zur vorgesehenen Drehachse stehende Achse oder Richtung.

Üblicherweise entspricht die vorgesehene Drehachse der Längsmittelachse des Futterkörpers, des Basiskörpers und/oder des Spannfutters.

Die Angabe "vorne" bezieht sich beim Spannfutter auf den Bereich des freien Endes, welches zur Aufnahme der Werkzeuge und/oder Werkstücke ausgelegt ist. Entsprechend ist das freie Ende des Spannfutters der Antriebsspindel abgewandt. Der Ausdruck "hinten" bezeichnet entsprechend den Bereich des Spannfutters, welcher zur Kopplung an die Werkzeugmaschine vorgesehen ist.

Falls nicht anders angegeben, sind vorliegenden im Zusammenhang mit Zylinderformen bzw. den Adjektiven zylindrisch oder zylinderförmig stets gerade Zylinder bzw. geradzylindrische Formen gemeint.

Der Ausdruck "im Wesentlichen kreiszylindrisch ausgebildet" meint in Bezug auf die Spannbolzen vorliegend, dass ein Querschnitt der Spannbolzen in den Bereichen, in welchen sie im Futterkörper oder in Ausnehmungen des Futterkörpers geführt werden, kreisförmig oder kreissegmentförmig ist, wobei bei kreissegmentförmigen Querschnitten ein Zentriwinkel des Kreissegments wenigstens 190°, bevorzugt wenigstens 210°, im Besonderen wenigstens 300° oder wenigstens 320°, beträgt. Bei einem kreisegmentförmigem Querschnitt beträgt der maximale Zentriwinkel insbesondere 350°, im Speziellen 340°. Ein Kreissegment ist dabei die Teilfläche einer Kreisfläche, die von einem Kreisbogen und einer Kreissehne begrenzt wird. Dies ist nicht zu verwechseln mit einem Kreissektor, welcher von einem Kreisbogen und zwei Kreisradien begrenzt wird.

Wie sich gezeigt hat, kann mit dem erfindungsgemässen Spannfutter eine äusserst hohe Präzision erreicht werden, so dass das Spannfutter als Hochpräzisionsspannfutter mit einem relativ breiten Spannbereich einsetzbar ist. Der Spannbereich kann beispielsweise einen Durchmesser von 0.5 - 30 mm, insbesondere 1 - 20 mm, bevorzugt 3 - 12 mm, aufweisen. Zudem können über den gesamten Spannbereich hohe Rundlaufgenauigkeiten erzielt werden. Gemessen von den vorderen freien Stirnflächen der Spannbolzen sind in einem Abstand von viermal dem Spanndurchmesser Rundlaufgenauigkeit von bis zu ≤ 0.005 mm erzielbar. Die erfindungsgemässe Konstruktion der Spannfutter ermöglicht des Weiteren eine hohe Lebensdauer bei konstanter Spannpräzision.

Besonders geeignet sind die Spannfutter zur Verwendung mit Rundschleifmaschinen, Werkzeugschleifmaschinen und/oder Drehmaschinen, im Besonderen mit Werkzeugschleifmaschinen.

Die erfindungsgemässen Spannfutter haben sich als besonders vorteilhaft herausgestellt bei der Fertigung und/oder beim Nachschärfen von Werkzeugen, insbesondere Monoblock-Werkzeuge, wie z.B. Fräser, Bohrer, Gewindebohrer und/oder Reibahlen.

Ohne an eine Theorie gebunden zu sein, wird davon ausgegangen, dass die im Wesentlichen kreiszylindrische Form der Spannbolzen in Bereichen, in welchen sie im Futterkörper geführt werden, zu einer verbesserten Stabilität des Spannfutters im Betrieb führt, da die Spannbolzen in allen Richtungen senkrecht zu ihren Längsachsen im Wesentlichen konstante Belastbarkeiten im Bereich der Führung aufweisen. Dies ist wichtig, da bei der Bearbeitung nebst den in radialer Richtung auf die Werkstücke oder Werkzeuge einwirkenden Haltekräften über die Spannbolzen auch veränderliche Drehmomente übertragen werden müssen. Zudem dürften die im Wesentlichen runden Oberflächen der Spannbolzen in den Bereichen in welchen sie im Futterkörper geführt werden eine geschmeidigere Führung im Futterkörper ermöglichen, da die Oberflächen der Spannbolzen grösstenteils frei von Kanten sind. Weiter können die Spannbolzen aufgrund ihrer Form im Futterkörper in kreiszylindrischen Ausnehmungen oder Bohrungen geführt werden, welche im Vergleich mit anderen Ausnehmungen einfacher und präziser herstellbar sind.

Aufgrund der in Bezug auf den Basiskörper axial stationär angeordneten Spannbolzen oder Spannlamellen, stellen die freien Stirnflächen der Spannbolzen zudem stets eine fix definierte Bezugsebene des Spannfutters dar, welche unabhängig vom Durchmesser des einzuspannenden Werkstücks bzw. Werkzeugs immer an der gleichen Position vorliegt. Selbst bei einem Wechsel auf ein Werkstück oder Werkzeug mit einem anderen Durchmesser ändern sich also die axialen Positionen der freien Stirnflächen der Spannbolzen nicht. In Kombination mit den erfindungsgemässen Spannbolzen erhöht dies die Präzision des Spannfutters insgesamt. Zudem wird die benötigte Zeit beim Einspannen signifikant reduziert.

Weiter kann der Basiskörper als axial stehende oder fixe Basis des Spannfutters dienen und insbesondere zur Ankopplung an eine Antriebsspindel einer Werkzeugmaschine ausgelegt sein. Bei angekoppeltem Spannfutter sind die Positionen der vorderen Enden oder die freien Stirnflächen der Spannbolzen in axialer Richtung somit auch in Bezug auf die Werkzeugmaschine festgelegt.

Im Vergleich mit bekannten Spannsystemen kann die Anzahl der Teile des Weiteren auf einem relativ gesehen geringen Niveau gehalten werden. Dies kommt einerseits der Spannpräzision zu Gute. Andererseits wird dadurch der Herstell- und Wartungsaufwand gering gehalten.

Das Spannfutter ist insbesondere zum zentrischen Spannen von Werkzeugen und/oder Werkstücken ausgelegt.

Die schräg eingebauten Spannbolzen verlaufen bevorzugt vom hinteren Bereich des Spannfutters zum vorderen Bereich des Spannfutters auf einer gedachten konischen Mantelfläche schräg nach Innen in Richtung der vorgesehenen Drehachse des Spannfutters hin.

Ein Winkel zwischen der Längsmittelachse der Spannbolzen und der vorgesehenen Drehachse des Spannfutters liegt bevorzugt im Bereich von 8 -45°, insbesondere 15 - 35°, bevorzugt 20 - 30°, im Speziellen 25 - 28°.

Die Ausnehmungen im Futterkörper sind insbesondere regelmässig um die vorgesehene Drehachse herum angeordnet. Grundsätzlich sind aber auch unregelmässige Anordnungen denkbar.

Die Anzahl der Spannbolzen kann entsprechend den jeweiligen Anforderungen gewählt werden. Besonders bevorzugt verfügt das Spannfutter über 2 oder mehr, bevorzugterweise über 3 oder mehr, insbesondere über 4 oder mehr, weiter bevorzugt über 5 oder mehr, im Speziellen über 6 oder mehr, Spannbolzen. Eine maximale Anzahl der Spannbolzen beträgt insbesondere 12, bevorzugt 10, im Speziellen 8. Für spezielle Anwendungen könne aber auch mehr als 12 Spannbolzen vorgesehen sein.

Als besonders zweckmässig haben sich Spannfutter mit genau 6 Spannbolzen herausgestellt. Dadurch wird eine optimale Spannwirkung bei zugleich hoher Präzision und relativ geringem Herstellungsaufwand erreicht.

Insbesondere verfügt der Futterkörper über Ausnehmungen in welchen die Spannbolzen entlang der Längsrichtung der Ausnehmungen verschiebbar geführt sind. Die Ausnehmungen verlaufen dabei wie die Spannbolzen schräg zu einer vorgesehen Drehachse des Spannfutters. Die Anzahl der Ausnehmungen zur Führung der Spannbolzen entspricht vorzugsweise der Anzahl der Spannbolzen. Im Besonderen liegt jeder Spannbolzen in einer separaten Ausnehmung vor. Die Ausnehmungen sind insbesondere auf die im Wesentlichen kreiszylindrischen Abschnitte der Spannbolzen abgestimmt, so dass eine Bewegung der Spannbolzen auf eine lineare Bewegung entlang der Längsachse der Ausnehmungen beschränkt wird.

Die Längsachsen der Ausnehmungen verlaufen bevorzugt vom hinteren Bereich des Futterkörpers zum vorderen Bereich des Futterkörpers auf einer gedachten konischen Mantelfläche schräg nach Innen in Richtung der vorgesehenen Drehachse des Spannfutters hin.

Ein Winkel zwischen der Längsmittelachse der Ausnehmungen und der vorgesehenen Drehachse des Spannfutters liegt bevorzugt im Bereich von 8 -45°, insbesondere 15 - 35°, bevorzugt 20 - 30°, im Speziellen 25 - 28°. Der Winkel zwischen der Längsmittelachse der Ausnehmungen und der vorgesehenen Drehachse ist im Besonderen im Wesentlichen identisch mit dem Winkel zwischen der vorgesehenen Drehachse und der Längsmittelachse der Spannbolzen.

Die Ausnehmungen sind insbesondere regelmässig um die vorgesehene Drehachse herum angeordnet.

Bevorzugt durchdringen die Ausnehmungen den Futterkörper von einem hinteren Bereich zu einem vorderen Bereich des Futterkörpers. Damit ist insbesondere gemeint, dass die Ausnehmungen durchgängig sind und je eine Öffnung im hinteren Bereich und im vorderen Bereich aufweisen.

Die Ausnehmungen sind auf Spannbolzen abgestimmt, insbesondere derart, dass eine präzise Führung mit einem minimalen Spiel möglich ist. Unter einem minimalen Spiel wird vorliegend beispielsweise eine Durchmesserdifferenz zwischen Aussendurchmesser der Spannbolzen und Innendurchmesser der Ausnehmungen von vorzugsweise 0.5 - 5 µm, insbesondere 1 - 3 µm, verstanden.

Bevorzugt sind die Ausnehmungen als kreiszylindrische Ausnehmungen ausgestaltet. Ein Aussendurchmesser der Spannbolzen ist dabei auf den Innendurchmesser der Ausnehmungen abgestimmt. Im Besonderen entspricht ein Aussendurchmesser der Spannbolzen in diesem Fall bevorzugt im Wesentlichen einem Innendurchmesser der kreiszylindrischen Ausnehmungen, insbesondere so dass ein minimales Spiel vorliegt. Mit diesen Massnahmen wird eine optimale Führung der Spannbolzen im Futterkörper ermöglicht.

Grundsätzlich ist es aber auch denkbar, zur Führung der Spannbolzen im Futterkörper anders geformte Ausnehmungen vorzusehen, welche es ermöglichen, eine Bewegung der Spannbolzen auf eine lineare Bewegung entlang der Längsachse der Ausnehmungen zu beschränken.

Der Basiskörper ist bevorzugt zylinderförmig ausgestaltet und verfügt im Besonderen über eine zentrale Ausnehmung, bevorzugt eine kreiszylindrische Ausnehmung, welche optional gestufte Abschnitte mit unterschiedlichen Innendurchmessern aufweisen kann.

Der Futterkörper weist vorteilhafterweise entlang seiner gesamten Länge entlang der vorgesehenen Drehachse eine durchgehende Ausnehmung auf. Dabei handelt es sich im Besonderen um eine im Wesentlichen kreiszylindrische Ausnehmung, welche optional gestufte Abschnitte mit unterschiedlichen Innendurchmessern aufweisen kann.

Mit Vorteil verfügt der Futterkörper über einen im Wesentlichen kreiszylindrischen Stutzen welcher in einer entsprechenden kreiszylindrischen Ausnehmung des Basiskörpers in axialer Richtung bewegbar gelagert ist. Der Stutzen ist bevorzugt hohlzylindrisch und/oder koaxial zur Längsachse des Spannfutters und/oder des Futterkörpers ausgerichtet. Im Speziellen schliesst der Stutzen an die durchgehende Ausnehmung des Futterkörpers an, so dass eine durchgehende Öffnung vom hinteren Ende des Futterkörpers, welches durch das hintere Ende des Stutzens gebildet wird, bis zum vorderen Ende des Futterkörpers vorliegt. Damit lässt sich eine präzise und zuverlässige Verschiebung des Futterkörpers gegenüber dem Basiskörper erreichen.

Es ist aber prinzipiell auch möglich, eine andere Lagerung zwischen Futterkörper und Basiskörper vorzusehen. Beispielsweise kann der Basiskörper über mehrere peripher am Basiskörper angeordnete Stifte verfügen, welche in axialer Richtung in entsprechende Öffnungen am Futterkörper eingreifen und so dessen axiale Bewegbarkeit ermöglichen.

Bevorzugt ist der Futterkörper im Bereich, in welchen die Spannbolzen geführt werden, kegelförmig oder kegelstumpfförmig ausgestaltet. Dies ist möglich, da die Spannbolzen schräg eingebaut sind. Durch die spezielle Form können der Materialbedarf als auch die im Betrieb rotierende Masse reduziert werden. Zudem ist der Spannbereich beim Einspannen von Werkstücken oder Werkzeugen besser zugänglich und es steht zusätzlicher Freiraum für die bearbeitenden Werkzeuge, wie beispielsweise Schleifscheiben, zur Verfügung. Damit besteht insgesamt mehr Flexibilität bei der Bearbeitung, was insbesondere bei Werkzeugschleifmaschinen vorteilhaft ist.

Es ist aber prinzipiell möglich, den Futterkörper anders auszugestalten, z.B. als kreiszylindrischer Körper.

Erfindungsgemäss liegen die hinteren Stirnflächen der Spannbolzen jeweils stets flächig an einer senkrecht zur vorgesehenen Drehachse des Spannsystems liegenden Kontaktfläche am Basiskörper an. Die Spannbolzen werden dabei mittels einer Rückhaltevorrichtung in radialer Richtung verschiebbar gehalten. Diese Massnahmen erhöhen die Präzision des Spannfutters signifikant, da insbesondere die negativen Einflüsse eines minimal notwendigen Spiels bei der Führung der Spannbolzen im Futterkörper reduziert werden können.

Das Rückhaltesystem ist insbesondere so ausgebildet, dass bei gegebener radialer Verschiebbarkeit der Spannbolzen eine Bewegung in axialer Richtung als auch eine Verdrehung der Spannbolzen um deren Längsachse eingeschränkt oder vollständig blockiert wird.

Beispielsweise können die Spannbolzen durch eine in einer Richtung parallel zur vorgesehenen Drehachse wirkende formschlüssige und/oder kraftschlüssige Verbindung an der Kontaktfläche gehalten werden. Hierzu kann z.B. an jedem Spannbolzen ein seitlicher Vorsprung vorgesehen sein, welcher in eine am Basiskörper in radialer Richtung verlaufende Vertiefung eingreift. Zusätzlich oder alternativ kann der Spannbolzen über eine Vertiefung verfügen, welche mit entsprechenden Vorsprüngen am Basiskörper zusammenwirkt. Als Vorsprünge sind z.B. Stifte, Pins, Stege und/oder Wölbungen denkbar. Die Vertiefungen können beispielsweise in Form von Nuten vorliegen.

Das Rückhaltesystem ist derart ausgebildet, dass wenigstens ein Spannbolzen, bevorzugt alle Spannbolzen, mit einer Vorspann- und/oder Federkraft in axialer Richtung an die Kontaktfläche gedrückt wird bzw. werden. Die Vorspannkraft wird bevorzugt durch ein Federelement aufgebracht. Dadurch kann die Präzision des Spannfutters nochmals stark verbessert werden. Dies dürfte darauf zurückzuführen sein, dass die Toleranzen im Bereich der Rückhaltevorrichtung teilweise kompensiert werden können.

Besonders bevorzugt ist das Rückhaltesystem dabei derart ausgebildet, dass die Vorspannkraft einstellbar ist. Damit kann sichergestellt werden, dass die Spannbolzen mit definierter Kraft gegen die Kontaktfläche gedrückt werden und zugleich eine ausreichende Beweglichkeit der Spannbolzen in radialer Richtung gegeben ist. Dies ist insbesondere zur Gewährleistung einer langen Lebensdauer bei konstanter Spannpräzision vorteilhaft. Sollte die Vorspannkraft während dem Betrieb nachlassen, ist eine Nachjustierung auf relativ einfache Art und Weise jederzeit möglich.

Grundsätzlich kann aber auch ein Spannfutter ohne einstellbare Vorspannkraft vorgesehen werden. Dies kann insbesondere dann vorteilhaft sein, wenn der konstruktive Aufwand reduziert werden soll.

Besonders bevorzugt umfasst das Rückhaltsystem ein basiskörperseitiges Rückhaltelement, welches lösbar am Basiskörper, insbesondere an der Kontaktfläche, befestigbar ist und bevorzugt mit einem spannbolzenseitigen Rückhalteelement, welches am Spannbolzen vorliegt, zusammenwirkt. Dies erleichtert die Justierung und Wartung des Spannsystems, da das basiskörperseitige Rückhalteelement entfernt und bei Bedarf nachbearbeitet werden kann, ohne dass die Spannbolzen entfernt werden müssen. Damit kann die Sicherung der Spannbolzen an der Kontaktfläche auf einfache Art und Weise optimal eingestellt oder nachjustiert werden.

Besonders bevorzugt ist das lösbare, basiskörperseitige Rückhaltelement so am Basiskörper befestigbar, dass es bezüglich der Position in der Kontaktebene in vorgegebenen Grenzen justierbar ist. Dies kann z.B. erreicht werden, indem das basiskörperseitige Rückhaltelement mit einer durch eine Ausnehmung im basiskörperseitigen Rückhaltelement gehenden Schraube am Basiskörper befestigt wird. Indem Schraube und Ausnehmung beispielsweise derart ausgelegt sind, dass in losem Zustand ein definiertes Spiel in der Ebene der Kontaktfläche vorliegt, lässt sich die Justierbarkeit auf einfache Art und Weise erreichen.

Im Besonderen umfasst die Rückhaltevorrichtung an wenigstens einem Spannbolzen, bevorzugt an jedem Spannbolzen, ein spannbolzenseitiges Rückhalteelement in Form von wenigstens einem am hinteren Ende des Spannbolzens angeordneten und seitlich abragenden Vorsprung, welcher jeweils von einem an der Kontaktfläche angeordneten basiskörperseitigen Rückhalteelement umgriffen wird, derart dass der Spannbolzen in radialer Richtung bewegbar ist, während er mit der hinteren Stirnfläche in axialer Richtung an der Kontaktfläche gehalten wird. Der Vorsprung ragt dabei bezogen auf die vorgesehene Drehachse des Spannfutters bevorzugt in tangentialer Richtung vom Spannbolzen weg und/oder der der Vorsprung steht bevorzugt vertikal zu einer Symmetrieebene des Spannbolzens. Insbesondere liegt dabei jedes basiskörperseitige Rückhalteelement als separates oder individuelles Element vor, welches lösbar an der Kontaktfläche befestigbar ist.

Gemäss einer noch vorteilhafteren Ausführungsform umfasst die Rückhaltevorrichtung an wenigstens einem Spannbolzen, bevorzugt an jedem Spannbolzen, ein spannbolzenseitiges Rückhalteelement in Form von wenigstens zwei am hinteren Ende des Spannbolzens diametral gegenüberliegend angeordneten Vorsprüngen, welche jeweils von einem an der Kontaktfläche angeordneten basiskörperseitigen Rückhalteelement umgriffen werden, derart dass der Spannbolzen in radialer Richtung bewegbar ist, während er mit der hinteren Stirnfläche in axialer Richtung an der Kontaktfläche gehalten wird. Die diametral gegenüberliegend angeordneten Vorsprünge ragen dabei bezogen auf die vorgesehene Drehachse des Spannfutters bevorzugt in tangentialer Richtung und/oder in einer Richtung vertikal zu einer Symmetrieebene des Spannbolzens von diesem weg.

In einer besonders bevorzugten Ausführungsform umfasst das spannbolzenseitige Rückhalteelement auf zwei diametral gegenüberliegenden Seiten im Bereich des hinteren Ende des Spannbolzens je zwei in radialer Richtung beabstandete und separate Vorsprünge, z.B. in Form von zylindrischen Stiften.

Das spannbolzenseitige Rückhalteelement oder die Vorsprünge am Spannbolzen können z.B. in Form von Stiften, und/oder Stegen vorliegen. Bevorzugt sind beispielsweise zylindrische Stifte.

Die spannbolzenseitigen Rückhalteelemente werden im Besonderen in abgeflachten Abschnitten des Spannbolzens angeordnet. Dadurch kann die Rückhaltevorrichtung insgesamt kompakter ausgestaltet werden.

Das basiskörperseitige Rückhalteelement verfügt bevorzugt über eine in radialer Richtung verlaufende Führungsnut und/oder einen in radialer Richtung verlaufenden Absatz, in welcher bzw. in welchem das spannbolzenseitige Rückhalteelement geführt wird, während eine Bewegung des Spannbolzens in axialer Richtung und/oder eine Verdrehung des Spannbolzens um seine Längsachse durch Formschluss verhindert wird. Das basiskörperseitige Rückhalteelement kann z.B. einen Sockelabschnitt umfassen von welchem ein Vorsprung seitlich in Richtung des Spannbolzens abragt, so dass zwischen Vorsprung und Basiskörper ein Freiraum vorliegt, welcher als Führungsnut für die spannbolzenseitigen Rückhalteelement dient. Grundsätzlich sind aber auch andere Ausgestaltungen des basiskörperseitigen Rückhalteelements möglich.

Mit den vorstehend beschriebenen Rückhaltevorrichtungen können die Spannbolzen im Besondern zwischen zwei gegenüberliegenden Rückhaltelementen an der Kontaktfläche gehalten werden. Dies hat sich in Bezug auf die Präzision bei der Führung und der Rückhaltung der Spannbolzen als besonders vorteilhaft herausgestellt. Wenn auf jeder der gegenüberliegenden Seiten des Spannbolzens ein separates und basiskörperseitiges Rückhalteelement eingesetzt wird, ergibt sich eine bestmögliche Einstellbarkeit und Flexibilität bei der Wartung des Spannfutters. Dies insbesondere wenn die basiskörperseitigen Rückhaltelemente so am Basiskörper befestigbar sind, dass sie bezüglich der Position in der Kontaktebene in vorgegebenen Grenzen justierbar sind.

Gemäss einer vorteilhaften Ausführungsform umfasst die Rückhaltevorrichtung ein Federelement, insbesondere ein Blattfederelement, welches am Basiskörper, insbesondere an der Kontaktfläche, befestigt ist und mit den Spannbolzen zusammenwirkt. Bevorzugt umgreift das Federelement das spannbolzenseitige Rückhalteelement, so dass ein freies Ende der Feder des Federelements gegen das spannbolzenseitige Rückhalteelement drückt und dadurch den Spannbolzen gegen die Kontaktfläche drückt. Durch das Federelement kann der Spannbolzen mit einer Vorspannkraft in axialer Richtung an die Kontaktfläche gedrückt werden.

Das Federelement umfasst im Besonderen einen am Basiskörper angebrachten Sockel, von welchen eine Blattfeder abragt, so dass zwischen Blattfeder und Basiskörper ein Freiraum gebildet wird, welcher als Führungsnut für die spannbolzenseitigen Rückhalteelement dient. Es sind aber auch andere Ausgestaltungen möglich.

In einer bevorzugten Ausführungsform ist das Federelement einstückig ausgebildet. Dies ist in Hinblick auf die Herstellung, Montage und Präzision vorteilhaft. Es können aber grundsätzlich auch Federelemente aus mehreren Teilen eingesetzt werden, wenn dies aus anderen Gründen zweckdienlich ist.

In einer besonders bevorzugten Ausführungsform sind die Spannbolzen derart im Futterkörper geführt, dass Sperrluft zwischen Spannbolzen und Futterkörper durchleitbar ist.

Besonders bevorzugt ist hierfür in den kreiszylindrischen Bereichen der Spannbolzen jeweils eine Längsabflachung eingebracht. Dies insbesondere so, dass zwischen Spannbolzen und Futterkörper jeweils ein Freiraum bleibt, bevorzugt derart, dass in diesen Bereichen Sperrluft entlang den Spannbolzen geleitet und im Bereich der vorderen Enden der Spannbolzen austreten kann. In diesem Fall verfügen die Spannbolzen in den Bereichen, in welchen sie im Futterkörper geführt werden, über kreissegmentförmige Querschnitte.

Damit kann eine Verschmutzung im Bereich der Führung im Wesentlichen Vermieden werden. Wird der Sperrluft zudem ein Schmiermittel, z.B. Öl, beigemischt, wird zugleich eine Schmierung im Bereich der Spanbolzenführung und der übrigen beweglichen Teile des Spannfutters erreicht werden.

Besonders bevorzugt schliesst vorne an die Längsabflachung ein den Spannbolzen umlaufenden, verjüngter Abschnitt an. Der verjüngte Abschnitt ist insbesondere als ringförmige Nut ausgebildet. Der verjüngte Abschnitt ist insbesondere in einem zentralen Bereich des Spannbolzens eingebracht. Mit dem verjüngten Abschnitt ist es möglich, die Sperrluft gleichmässig um den Spannbolzen herum zu verteilen, was eine Sperrwirkung entlang des gesamten Umfangs sicherstellt. Wird der Sperrluft ein Schmiermittel beigegeben, wird dieses zudem rund um den Spannbolzen herum verteilt, was eine gleichmässige Schmierung der Spannbolzen in den Ausnehmungen gewährleistet.

An den verjüngten Abschnitt kann in einer weiter bevorzugten Ausführungsform zudem eine weitere Ausnehmung im Spannbolzen vorliegen, z.B. eine Abflachung, insbesondere eine schräg zur Längsachse des Spannbolzens ausgerichtete Schrägabflachung. Durch die weitere Ausnehmung kann die Sperrluft gezielt in die vorderen Bereiche bzw. in den Bereich der Spannstelle geleitet werden. Die Längsabflachung und die weitere Ausnehmung, insbesondere in Form einer Abflachung, sind dabei in radialer Richtung bezüglich der Längsachse der Spannbolzen bevorzugt in zwei unterschiedlichen radialen Richtungen angeordnet. Damit wird die Sperrluft in der umlaufenden Ausnehmung besser verteilt.

Insbesondere liegen im Basiskörper und/oder im Futterkörper Fluidkanäle vor, so dass Sperrluft aus einem Innenbereich des Futterkörpers und/oder des Basiskörpers in einen Bereich der hinteren Enden der Spannbolzen geführt werden kann. Damit kann die Sperrluft gezielt im Spannfutter verteilt werden.

Entsprechend verfügt das Spannfutter über wenigstens einen Sperrluftanschluss und/oder Sperrlufteinlass über welchen Sperrluft in die Innenbereiche des Futterkörpers und/oder des Basiskörpers zugeführt werden kann. Bevorzugt dient der vorstehend beschriebene rohrförmige Stutzen als Sperrlufteinlass. Damit kann die Sperrluft beispielsweise entlang der Antriebsspindel der Werkzeugmaschine direkt zugeführt werden.

Die Spannbolzen sind bevorzugt wenigstens teilweise, insbesondere vollständig, aus einem Hartmetall gefertigt. Das Hartmetall verfügt dabei insbesondere über eine höhere Härte als das Material des Basiskörpers und/oder des Futterkörpers. Wie sich gezeigt hat, ergibt sich zusammen mit der im Wesentlichen kreiszylindrischen Form der Spannbolzen damit eine besonders präzise Führung. Zudem lassen sich die Spannbolzen aus Hartmetallen bei vergleichbarer Steifigkeit kompakter dimensionieren.

Prinzipiell ist es aber auch möglich, die Spannbolzen aus einem anderen Material, beispielsweise einem Stahl, zu fertigen.

Basiskörper und Futterkörper werden insbesondere aus Stahl, insbesondere Einsatzstahl, gefertigt. Solche Stähle sind dem Fachmann an sich bekannt. Prinzipiell können aber auch andere Materialen verwendet werden, welche die mechanischen Anforderungen erfüllen.

In einer weiteren vorteilhaften Ausführungsform weist die Spannstelle eine Konizität auf, insbesondere um die beim Spannen auftretenden Aufkippmomente auszugleichen. Damit ist gemeint, dass im Bereich der Spannstelle der Spanndurchmesser in einer Richtung zum vorderen Ende des Spannfutters hin linear abnimmt, so dass eine konus- oder kegelförmige Spannstelle vorliegt. Ein Öffnungswinkel der konischen Spannstelle beträgt dabei insbesondere 1-20", bevorzugt 3-15", im Besonderen 6 - 10" (Einheit = Bogensekunden). Durch die Konizität kann die Präzision des Spannfutters weiter verbessert werden.

Prinzipiell kann die Spannstelle aber auch mit konstantem Spanndurchmesser über die gesamte Spannstelle bzw. ohne Konizität ausgebildet sein.

Besonders bevorzugt sind die Spannbolzen in einem Bereich der vorderen freien Enden als Spannlamellen ausgebildet. Dies meint insbesondere, dass Spannbolzen im Bereich der Spannstelle im Wesentlichen klingenförmig ausgebildet und/oder einen klingenförmigen Querschnitt aufweisen. Insbesondere sind die Querschnittsflächen der Spannbolzen im Bereich der Spannstelle im Wesentlichen kreissektorförmig ausgebildet, bevorzugt so, dass sich sämtliche Spannbolzen des Spannfutters in geschlossenem Zustand seitlich flächig berühren.

Im Besonderen sind die zur Kontaktierung des Werkstücks oder des Werkzeugs vorgesehenen Bereiche der Spannbolzen oder Spannlamellen abgeflacht, so dass die Spannbolzen jeweils eine ebene Kontaktfläche aufweisen.

Weiter ist es bevorzugt, wenn das Spannfutter eine Schutzhülse aufweist, welche am Futterkörper angebracht werden kann. Durch die Schutzhülse können die Innenbereiche des Spannfutters vor Verschmutzung geschützt und/oder Sperrluft im Spannfutter geleitet werden.

Bevorzugt handelt es sich um eine Schutzhülse, welche im vorderen Bereich konusförmig zuläuft und weiter bevorzugt im hinteren Bereich einen zylindrischen Abschnitt aufweist. Dies insbesondere in Kombination mit einem kegelförmig oder kegelstumpfförmig ausgebildeten Futterkörper. Damit ist der Spannbereich beim Einspannen von Werkstücken oder Werkzeugen besser zugänglich und es steht zusätzlicher Freiraum für die bearbeitenden Werkzeuge, wie beispielsweise Schleifscheiben, zur Verfügung. Damit besteht insgesamt mehr Flexibilität bei der Bearbeitung.

Im Besonderen ist die Schutzhülse so ausgebildet, dass sie durch den Futterkörper im Bereich der vorderen Öffnung abgestützt wird. Bevorzugt verfügt der Futterkörper hierfür über eine umlaufende Kontaktfläche, welche komplementär zur Öffnung der Schutzhülse ausgebildet ist.

Die Schutzhülse ist insbesondere aus einem Metall gefertigt, wobei Aluminium besonders bevorzugt ist. Damit kann die rotierende Masse reduziert werden. Grundsätzlich können aber auch andere Materialen verwendet werden, z.B. Stahl und/oder Kunststoffe.

Grundsätzlich sind aber insbesondere bei speziellen Gegebenheiten auch anders ausgestaltete Schutzhülsen möglich oder es kann ganz auf eine Schutzhülse verzichtet werden.

Weiter ist es vorteilhaft, wenn das Spannfutter einen Zugrohradapter umfasst, welcher eine mechanische Schnittstelle zwischen dem Futterkörper und dem Zugrohr der Werkzeugmaschine bilden kann. Bevorzugt ist der Zugrohradapter mechanisch lösbar mit dem Futterkörper verbindbar, z.B. durch ein form- und/oder kraftschlüssiges Verbindungselement, beispielsweise eine Schraub- und/oder Klemmverbindung. Damit kann das Spannfutter durch Austausch des Zugrohradapters in einfacher Art und Weise an verschiedene Zugrohre angepasst werden.

Der Zugrohradapter ist bevorzugt im Futterkörper, insbesondere mit seiner Längsachse entlang der vorgesehenen Drehachse des Spannfutters, angeordnet.

Bevorzugt umfasst der Zugrohradapter eine Wellenkupplung, welche zum Übertragen von axialen Kräften und zugleich zum Ausgleich eines Parallelversatzes und/oder eines Winkelversatzes zwischen Antriebsspindel und Spannfutter ausgelegt ist. Bevorzugt handelt es sich dabei um eine rückstellkräftefreie Wellenkupplung. Entsprechende Wellenkupplungen können beispielsweise als Ausgleichselement ein Kardangelenk, welches radial in entsprechenden Führungen verschiebbar ist, aufweisen. Weitere Konstruktionsmöglichkeiten sind dem Fachmann an sich bekannt.

Durch die Verwendung derartiger Wellenkupplungen können Fluchtungsfehler zwischen Zugrohr und Spannfutter oder dessen Komponenten kompensiert werden. Wie sich herausgestellt hat, ist erhöht dies in Kombination mit den erfindungsgemäss ausgebildeten Spannbolzen die Präzision nochmals signifikant.

Besonders bevorzugt umfasst der Zugrohradapter ein zylindrisches oder hohlzylindrisches Ankerelement, auf welchem ein Zwischenadapter in Form einer ersten hohlzylindrischen Hülse zum Ankoppeln an das Spannfutter sowie ein Verbindungsadapter in Form einer zweiten hohlzylindrischen Hülse zum Ankoppeln an ein Zugrohr einer Werkzeugmaschine angeordnet sind, wobei Ankerelement, Zwischenadapter und Verbindungsadapter derart dimensioniert sind, dass zwischen Ankerelement und Verbindungsadapter sowie zwischen Ankerelement und Zwischenadapter in radialer Richtung ein Spiel vorliegt. Damit kann eine besonders vorteilhafte Wellenkupplung erhalten werden.

Unter dem Begriff "Spiel" wird vorliegend insbesondere ein bewusst gewählter Bewegungsfreiraum verstanden, welcher es ermöglicht, dass sich Bauteile, hier beispielsweise Ankerelement, Zwischenadapter und Verbindungsadapter, nach der Montage in definierter Weise gegeneinander bewegen lassen.

Der Zwischenadapter verfügt insbesondere über ein Aussengewinde, mit welchen er in ein im Futterkörper, bevorzugt in einem hohlzylindrischen Stutzen des Futterkörpers, angeordnetes Innengewinde einschraubbar ist. Der Verbindungsadapter weist bevorzugt ein Aussengewinde auf, welches zum Aufschrauben des Zugrohrendes ausgelegt ist. Entsprechend besteht rund um den Zugrohradapter ein ringförmiger Freiraum, welcher ein Aufschrauben des Zugrohrs ermöglicht.

Das Spiel gegenüber dem Ankerelement ist dabei insbesondere derart bemessen, dass sich die Längsachse des Zwischenadapters und die Längsachse des Verbindungsadapters um wenige hundertstel Grad, beispielsweise um 0.05 - 0.5°, insbesondere 0.1-0.3°, gegenüber der Längsachse des Ankerelements bewegen lassen. Dies kann beispielsweise erreicht werden, indem der Innendurchmesser des Zwischenadapters und der Innendurchmesser des Verbindungsadapters grösser gewählt wird als der Aussendurchmesser des Ankerelements in denjenigen Bereichen, in welchen Zwischenadapter und Verbindungsadapter vorliegen.

In axialer Richtung können der Zwischenadapter und der Verbindungsadapter auf dem Ankerelement durch einen endseitigen Flansch und/oder ein endseitig auf das Ankerelement aufschiebbares und fixierbares Abschlusselement fixiert werden. Bevorzugt weist das Ankerelement an einen Ende, insbesondere dem nach vorne gerichteten Ende, einen Flansch auf, während am entgegengesetzten Ende ein auf das Ankerelement aufschiebbares und fixierbares Abschlusselement vorliegt.

Mit Vorteil erfolgt die axiale Fixierung des Zwischenadapters und des Verbindungsadapters so, dass Zwischenadapter und Verbindungsadapter nebst dem radialen Spiel auch in axialer Richtung ein Spiel aufweisen. Das Spiel beträgt z.B. 0.1 - 0.5% bezogen auf die Gesamtlänge des Ankerelements.

Zwischenadapter und Verbindungsadapter sind insbesondere verdrehsicher gekoppelt. Dies kann z.B. durch stirnseitig angeordnete Verbindungselemente an den gemeinsamen Kontaktflächen zwischen Zwischenadapter und Verbindungsadapter erreicht werden. Als Verbindungselemente können z.B. Stifte und/oder komplementäre Vorsprünge und Vertiefungen vorgesehen werden.

Die Fixierung des Flansches und/oder des Abschlusselements erfolgt vorzugsweise durch Stifte, welche aus radialen Bohrungen im Flansch und/oder Abschlusselement in korrespondierende Bohrungen im Ankerelement eingebracht und befestigt werden, z.B. durch verkleben und/oder verpressen.

Der Flansch und/oder das Abschlusselement verfügen in axialer Richtung bevorzugt je über eine kugelzonenförmige Kontaktfläche gegenüber dem Verbindungsadapter und/oder dem Zwischenadapter. Verbindungsadapter und/oder dem Zwischenadapter verfügen dabei in axialer Richtung mit Vorteil über komplementäre kugelzonenförmige Kontaktflächen. Dadurch lassen sich Verbindungsadapter und/oder Zwischenadapter gegenüber dem Flansch und dem Abschlusselement besser verkippen, was den Fluchtungsausgleich weiter erleichtert.

Der Verbindungsadapter ist im eingebauten Zustand insbesondere hinter dem Zwischenadapter angeordnet.

Weiter ist es bevorzugt, wenn eine Verdrehsicherung vorliegt, welche es ermöglicht, den Zugrohradapter in eingebautem Zustand gegenüber einer Verdrehung in Bezug auf den Basiskörper und/oder dem Futterkörper zu sichern. Hierfür verfügt der Zugrohradapter, beispielsweise im Bereich des Zwischenadapters, über wenigstens eine, bevorzugt zwei, in axialer Richtung verlaufende Nute(n). Nach erfolgtem Einbau des Zugrohradapters im Spannfutter kann dieser durch Eingriffselemente, z.B. Stifte, welche aus dem Basiskörper und/oder dem Futterkörper heraus in die Nuten eingreifen, vor einer Verdrehung gesichert werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine perspektivische Darstellung eines Futterkörpers für ein erfindungsgemässes Spannfutter;
- Fig. 2: einen Längsschnitt durch den Futterkörper aus Fig. 1 entlang der Linie A-A;
- Fig. 3: eine perspektivische Ansicht eines Basiskörpers für ein erfindungsgemässes Spannfutter;
- Fig. 4: einen horizontalen Längsschnitt auf der Höhe der Längsachse durch den Basiskörper aus Fig. 3;
- Fig. 5: einen erfindungsgemässen Spannbolzen mit einem im Wesentlichen kreiszylindrischem Führungsabschnitt in perspektivischer Ansicht;
- Fig. 6: eine Aufsicht auf die hintere Stirnfläche des Spannbolzens aus Fig. 5;
- Fig. 7: eine Ansicht des Spannbolzens aus Fig. 5 von hinten in einer Richtung entlang der Längsmittelachse des Spannbolzens;
- Fig. 8: einen Längsschnitt durch den Spannbolzen aus Fig. 5 entlang der Längsmittelachse;
- Fig. 9: zwei spiegelbildliche, basiskörperseitige Rückhalteelemente;
- Fig. 10: eine Aufsicht aus eines der beiden Rückhalteelemente aus Fig. 9;
- Fig. 11: eine perspektivische Ansicht eines Zugrohradapters;
- Fig. 12: einen Längsschnitt in einer vertikalen Ebene durch den Zugrohradapter aus Fig. 11;
- Fig. 13: ein erfindungsgemässes Spannfutter in montiertem Zustand (ohne Schutzhülse);
- Fig. 14: das Spannfutter aus Fig. 13 mit aufgeschraubter Schutzhülse von vorne entlang der Längsachse in geschlossenem Zustand;
- Fig. 15: das Spannfutter aus Fig. 14 in offenem Zustand mit maximalem Öffnungsdurchmesser der Spannstelle;
- Fig. 16: einen Schnitt durch das in Fig. 15 gezeigte Spannfutter entlang der Linie A-A;
- Fig. 17: in der oberen Hälfte einen Schnitt des geöffneten Spannfutters aus Fig. 15 entlang der Linie C-C. In der unteren Hälfte ist ein Schnitt desselben Spannfutters in geschlossenem Zustand entlang der Linie D-D in Fig. 14 gezeigt;
- Fig. 18: das an einer Spindel einer Werkzeugmaschine montierte und an ein Zugrohr gekoppelte Spannfutter aus Fig. 15 in einer Aufsicht mit abschnittsweisen Längsschnittdarstellungen auf der Höhe der Längsmittelachse.

Grundsätzlich sind in den Figuren gleiche Teile mit gleichen Bezugszeichen versehen.

### Wege zur Ausführung der Erfindung

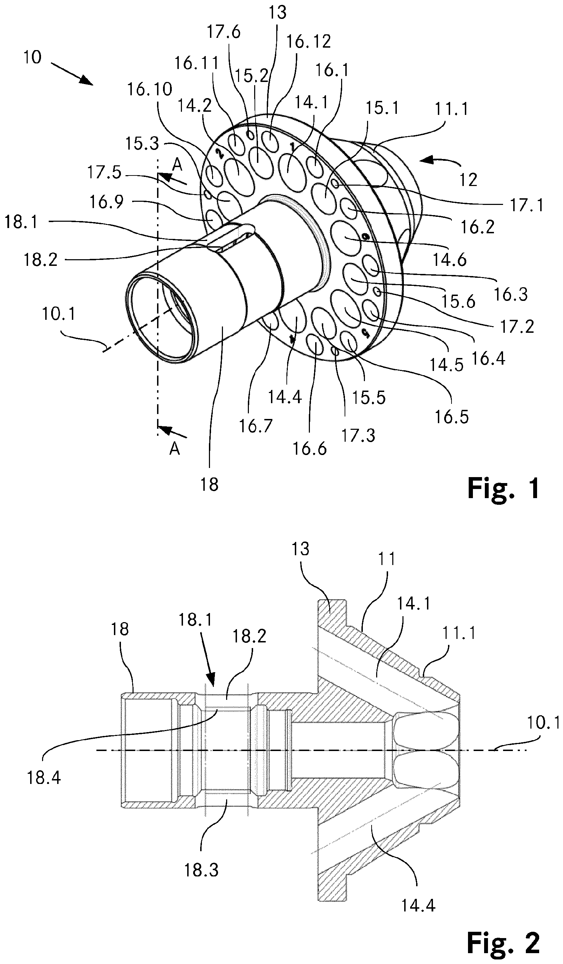

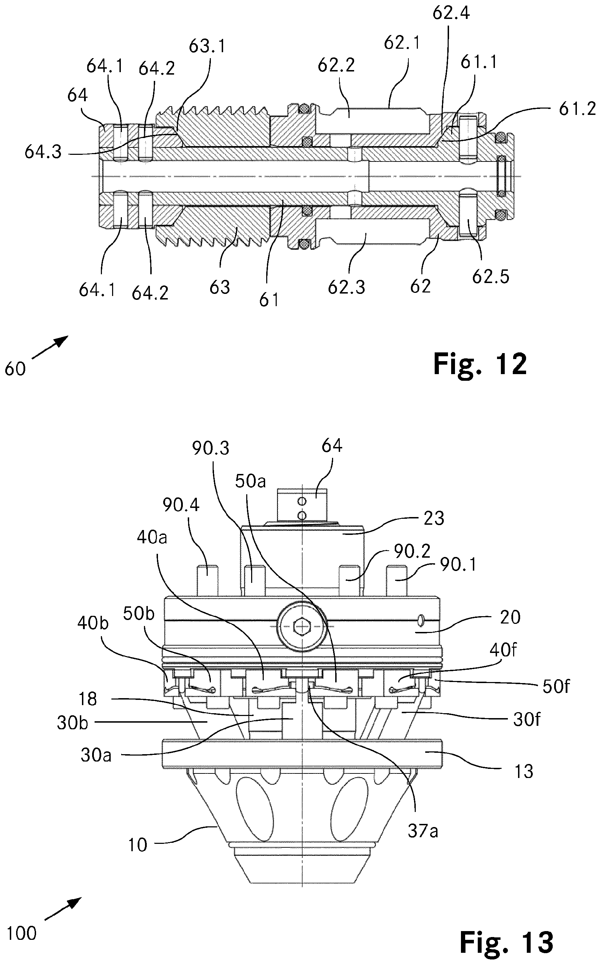

Fig. 1 zeigt eine perspektivische Darstellung eines Futterkörpers 10 eines erfindungsgemässen Spannfutters 100 (siehe Fig. 13-17 für eine Gesamtansicht des Spannfutters). Fig. 2 zeigt einen Längsschnitt durch den Futterkörper 10 aus Fig. 1 entlang der Linie A-A.

Der Futterkörper 10 weist im vorderen Bereich (in Fig. 1 und 2 rechts) einen kegelstumpfförmigen Abschnitt 11 auf, welcher entlang seiner Längsachse 10.1 über eine zentrale zylindrische Ausnehmung 12 verfügt. Die zentrale zylindrische Ausnehmung 12 weitet sich zum vorderen Ende des kegelstumpfförmigen Abschnitts 11 konisch auf. Die Spitze des kegelstumpfförmigen Abschnitts 11 bildet dabei das vordere Ende des Futterkörpers 10. Im kegelstumpfförmigen Abschnitt 11 ist zudem ein umlaufender Absatz 11.1 eingebracht.

An der Basis des kegelstumpfförmigen Abschnitts 11 geht dieser in einen umlaufenden und nach aussen ragenden, zylindrischen Flansch 13 über.

Der Futterkörper 10 verfügt über insgesamt sechs schräg eingebrachte Ausnehmungen 14.1 - 14.6 (teilweise verdeckt in Fig. 1) in Form von sechs regelmässig um die Längsachse 10.1 herum angeordneten, kreisrunden Bohrungen, welche in einem Winkel von ca. 26.6° zur Längsachse vom hinteren Ende des Flansches 13 durch den kegelstumpfförmigen Abschnitt 11 hindurch führen und im vorderen Bereich der zentralen zylindrischen Ausnehmung 12 münden. Zwischen den Ausnehmungen 14.1 - 14.6 verlaufen zudem sechs Bohrungen 15.1 - 15.6 (teilweise verdeckt in Fig. 1) vom hinteren Ende des Flansches 13 in einer Richtung parallel zur Längsachse durch den kegelstumpfförmigen Abschnitts 11 hindurch. Die Bohrungen 15.1 - 15.6 treten entsprechend im Bereich der Mantelfläche des kegelstumpfförmigen Abschnitts 11 aus diesem heraus.

Weiter sind im Randbereich des Flansches 13 auf einer Kreislinie ausserhalb der Bohrungen 15.1 - 15.6 und der Ausnehmungen 14.1 - 14.6 insgesamt 12 weitere Bohrungen 16.1 - 16.12 (teilweise verdeckt in Fig. 1) eingebracht, welche paarweise regelmässig entlang dem Randbereich des Flansches 13 angeordnet sind. Je zwischen zwei der weiteren Bohrungen 16.1 - 16.12 liegt zudem jeweils ein Schraubloch 17.1 - 17.6 (teilweise verdeckt in Fig. 1) mit Innengewinde vor.

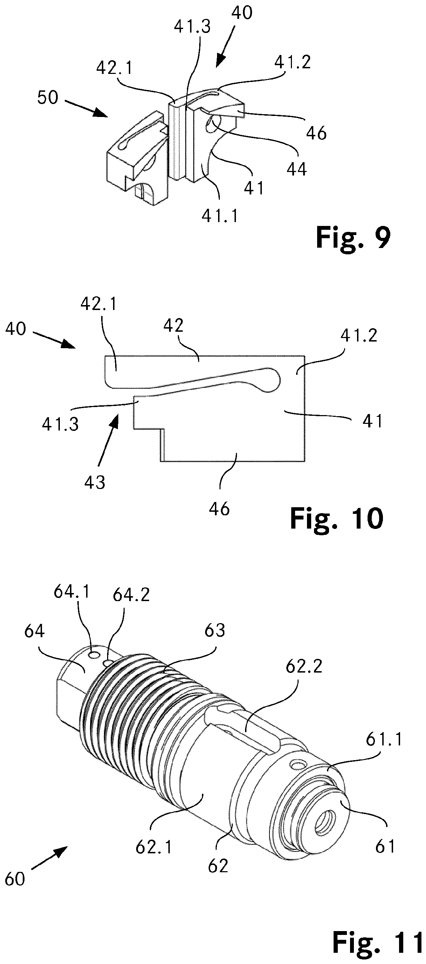

Vom hinteren Ende des Flansches 13 ragt des Weiteren ein hohlzylindrischer Stutzen 18 in einer Richtung weg vom kegelstumpfförmigen Abschnitt 11 und entlang der Längsachse 10.1 aus dem Flansch 13 heraus. Der Innenbereich des Stutzens 18 bildet mit der zentralen Ausnehmung 12 des kegelstumpfförmigen Abschnitts 11 eine durchgehende Öffnung. Ungefähr auf halber Strecke zwischen dem freien Ende des Stutzens 18 und dem Flansch 13 durchdringen in einem Bereich einer Einschnürung 18.1 des Stutzens zwei diametral gegenüberliegende und parallel zur Längsachse verlaufende Langlöcher 18.2, 18.3 die Mantelfläche des Stutzens 18. Im Bereich der Einschnürung 18.1 ist im Innern des hohlzylindrischen Stutzens 18 ein Innengewinde 18.4 eingebracht, welches insbesondere zur Befestigung eines Zugrohradapters (siehe Fig. 10 - 11) dient.

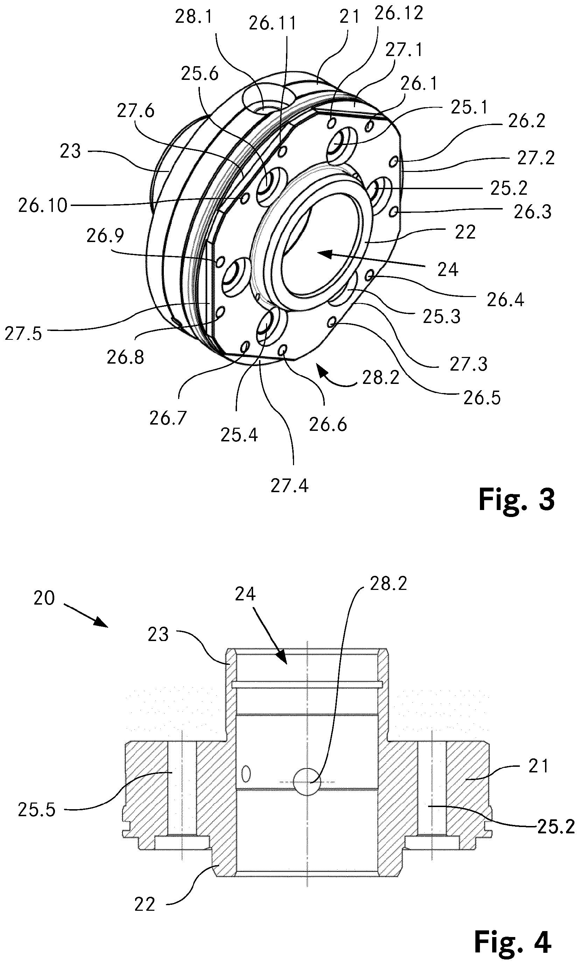

Fig. 3 zeigt eine perspektivische Ansicht eines Basiskörpers 20 eines erfindungsgemässen Spannfutters 100 (siehe Fig. 13 - 17 für eine Gesamtansicht des Spannfutters). Fig. 4 zeigt einen horizontalen Längsschnitt auf der Höhe der Längsachse durch den Basiskörper 20 aus Fig. 1.

Der Basiskörper 20 beinhaltet einen zentralen zylindrischen Abschnitt 21 von welchem nach vorne (in Fig. 4 auf der rechten Seite) ein vorderer hohlzylindrischer Stutzen 22 abragt, während auf der gegenüberliegenden Seite des zentralen zylindrischen Abschnitts 21 ein hinterer und längerer hohlzylindrischer Stutzen 23 abragt. Die Stutzen 22, 23 sind konzentrisch zum zentralen zylindrischen Abschnitt 21 angeordnet und die Aussendurchmesser der Stutzen 22, 23 entsprechen in etwa dem halben Aussendurchmesser des zentralen zylindrischen Abschnitts 21. Der zentrale zylindrische Abschnitt 21 verfügt zudem über eine zentrale zylindrische Ausnehmung, welche den gleichen Innendurchmesser aufweist wie der vordere Stutzen und mit diesem sowie dem hinteren Stutzen 23 eine durchgehende Ausnehmung 24 durch den Basiskörper 20 bildet.

Der Innendurchmesser der durchgehenden Ausnehmung 24 entspricht ungefähr dem Aussendurchmesser des hohlzylindrischen Stutzens 18 des Futterkörpers 10 aus Fig. 1 und 2.

Auf der vorderen Seite des zylindrischen Abschnitts 21 sind in Vertiefungen insgesamt sechs Bohrungen 25.1 - 25.6 gleichmässig rund um den vorderen Stutzen herum angeordnet. In radialer Richtung ausserhalb der Bohrungen 25.1 - 25.6 sind zudem insgesamt 12 weitere Bohrungen 26.1 - 26.12 eingebracht, welche paarweise gleichmässig rund um den vorderen Stutzen angeordnet sind. In radialer Richtung ausserhalb der Bohrungen 25.1 - 25.6 ist im zylindrischen Abschnitt 21 jeweils ein kreissegmentförmiger Absatz 27.1 - 27.6 eingebracht, so dass im Randbereich des zylindrischen Abschnitts 21 insgesamt 6 gestufte Bereiche vorliegen.

Weiter führen zwei diametral gegenüberliegende und durchgehende Bohrungen 28.1, 28.2 jeweils aus einer Vertiefung im Mantelbereich des zylindrischen Abschnitts 21 in radialer Richtung bis in die durchgehende Ausnehmung 24 des Basiskörpers. In montiertem Zustand korrespondieren durchgehende Bohrungen 28.1, 28.2 mit den Langlöchern 18.2, 18.3 des Futterkörpers.

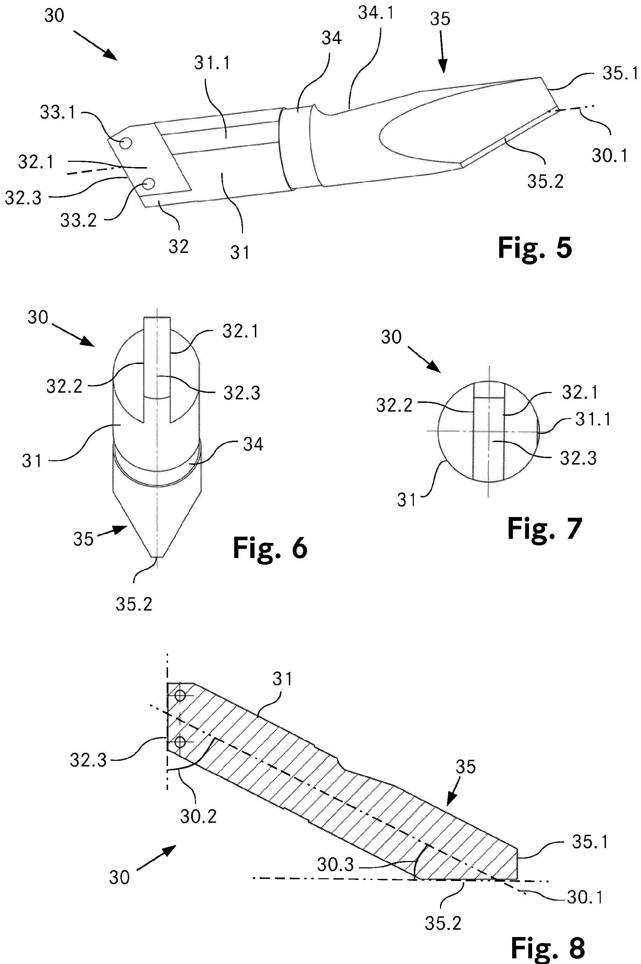

Die Bereiche ausserhalb des holzylindrischen Stutzens 22 und zwischen den Bohrungen 25.1 - 25.6 auf der vorderen Seite des zylindrischen Abschnitts 21 sind als Kontaktflächen für die hinteren Stirnflächen 32.3 der Spannbolzen 30 (siehe Fig. 5 - 8) vorgesehen.

Fig. 5 zeigt einen erfindungsgemässen Spannbolzen 30 in perspektivischer Ansicht. Die Fig. 6 - 8 zeigen den Spannbolzen 30 aus Fig. 5 in verschiedenen weiteren Ansichten: In einer Aufsicht auf die hintere Stirnfläche (Fig. 6), von hinten in einer Richtung entlang der Längsmittelachse des Spannbolzens (Fig. 7) und in einem Längsschnitt (Fig. 8).

Der Spannbolzen 30 verfügt über einen im Wesentlichen kreiszylindrischen Abschnitt 31, welcher derart dimensioniert ist, dass er im Wesentlichen spielfrei in einer der Ausnehmungen 14.1 - 14.6 verschiebbar gelagert werden kann. In Fig. 6 auf der oberen Seite des Spannbolzens 30 ist eine Längsabflachung 31.1 eingebracht. Der im Wesentlichen kreiszylindrische Abschnitt 31 verfügt demnach über einen kreissegmentförmigen Querschnitt. Im Bereich des hinteren Endes 32 des Spannbolzens 30 liegt beidseitig eine Abflachung 32.1, 32.2 vor, in welcher quer zur Längsachse 30.1 des Spannbolzens zwei durchgehende Bohrungen 33.1, 33.2 eingebracht sind. Die Bohrungen sind zur Aufnahme von zylindrischen Stiften (Teil 37a in Fig. 13) vorgesehen, welche als spanbolzenseitige Rückhaltelemente bzw. Vorsprünge fungieren. Die hintere Stirnfläche 32.3 des Spannbolzens 30 ist als ebene Fläche ausgebildet, welche gegenüber der Längsmittelachse des Spannbolzens um einen Winkel 30.2 von ca. 63° geneigt ist.

An der entgegengesetzten Seite des kreiszylindrischen Abschnitts 31 folgt ein verjüngter Abschnitt 34, an welchen der Klemmbereich 35 des Spannbolzens 30 anschliesst. An den verjüngten Abschnitt 34 schliesst wiederum eine Längsabflachung 34.1 an. Im Klemmbereich 35 ist der Spannbolzen 30 klingenförmig ausgebildet, so dass der Spannbolzen im Klemmbereich im Wesentlichen kreissektorförmige Querschnittsflächen aufweist. Das vordere Ende des Spannbolzens wird gebildet durch die vordere freie Stirnfläche 35.1, welche eben und planparallel zur hinteren Stirnfläche 32.3 ist, sowie die im Wesentlichen senkrecht zur vorderen Stirnfläche 35.1 angeordnete Klemmfläche 35.2, welche den dünnsten Bereich des Klemmbereichs 35 bildet. Entsprechend weist die Klemmfläche 35.2 gegenüber der Längsmittelachse 30.1 einen Winkel 30.3 von ca. 26° auf.

Fig. 9 zeigt ein erstes basiskörperseitig zu montierendes Rückhalteelement 40 (in Fig. 9 und 10 auf der rechten Seite) sowie ein spiegelbildlich dazu ausgebildetes, zweites basiskörperseitig zu montierendes Rückhalteelement 50. Fig. 10 zeigt das erste basiskörperseitig zu montierende Rückhalteelement 40 in einer Aufsicht.

Das Rückhalteelement 40 verfügt über einen länglichen Sockel 41 mit einer Basisfläche 41.1 an der Unterseite, welche zur Auflage auf dem Basiskörper vorgesehen ist, und zwei oberen Längskanten 41.2 und 42.2. An der Oberseite des Sockels im Bereich der rechten oberen Längskante 41.2 des Sockels ist ein Blattfederelement 42 angeordnet, wobei das Blattfederelement 42 planparallel zur Basisfläche 41.1 verläuft und mit einem freien Ende 42.1 den Sockel 41 bzw. die gegenüberliegende obere Längskante 41.3 des Sockels 41 überragt. Zwischen dem freien Ende 42.1 des Blattfederelements 42 und der Ebene der Basisfläche 41.1 wird dadurch ein quaderförmiger Freiraum 43 gebildet, welcher in montiertem Zustand als Längsnut dient.

Zur Befestigung des Rückhalteelements 40 verfügt dieses über eine Bohrung 44, über welches es durch Schrauben in einer der 12 Bohrungen 26.1 - 26.12 am Basiskörper 20 befestigt werden kann.

Weiter umfasst das Rückhalteelement 40 einen von der Basisfläche 41.1 in entgegengesetzter Richtung zur Blattfeder 42 angeordneten Vorsprung 46 in Form eines kreissegmentförmigen Abschnitts. Der Vorsprung 46 verfügt über eine zu den kreissegmentförmigen Absätzen 27.1 - 27.6 des Basiskörpers 20 abschnittsweise komplementäre Form. Damit kann das Rückhalteelement 40 mit vorgegebener Orientierung am Basiskörper 20 befestigt werden.

Das Rückhaltelement 50 ist bis auf die spiegelbildliche Form identisch ausgestaltet.

Fig. 11 zeigt eine perspektivische Ansicht eines Zugrohradapters 60, während Fig. 12 einen vertikalen Längsschnitt durch den Zugrohradapter zeigt.

Der Zugrohradapter 60 beinhaltet ein längliches, hohlzylindrisches Ankerelement 61, welches auf der in Fig. 11 und 12 rechten Seite einen endständigen Flansch 61.1 aufweist. An den Flansch 61.1 anschliessend ist ein Zwischenadapter 62 in Form einer ersten hohlzylindrischen Hülse auf das Ankerelement 61 aufgeschoben. Der Zwischenadapter ist in axialer Richtung durch ein diametral gegenüberliegendes und in radialer Richtung der Wandung des Flansches 61.1 durchgreifendes Stiftpaar 62.5 am Flansch 61.1 mit Spiel gesichert.

Auf der Mantelfläche 62.1 des Zwischenadapters ist ein Aussengewinde eingebracht, mit welchem der Zwischenadapter 62 in ein im rohrförmigen Stutzen 18 des Futterkörpers 10 vorliegendes Innengewinde 18.4 eingeschraubt werden kann. Des Weiteren verfügt der Zwischenadapter 62 über zwei Vertiefungen 62.2, 62.3 in Form von zwei diametral gegenüberliegenden und parallel zu einer Längsachse des Ankerelements verlaufenden Längsnuten. In montiertem Zustand korrespondieren die Vertiefungen 62.2, 62.3 mit den Langlöchern 18.1, 18.2 und den Bohrungen 28.1, 28.2 des Basiskörpers 20. Durch entsprechend dimensionierte Stifte, welche in die Bohrungen 28.1, 28.2 des Basiskörpers 20 eingeschraubt werden, lässt sich somit eine Verdrehsicherung herstellen.

An den Zwischenadapter 62 anschliessend ist ein Verbindungsadapter 63 in Form einer zweiten hohlzylindrischen Hülse mit einem Aussengewinde auf das Ankerelement aufgeschoben. Über das Aussengewinde lässt sich der Verbindungsadapter mit einem Zugrohr einer Werkzeugmaschine verbinden. Verbindungsadapter 63 und Zwischenadapter 62 sind über zwei parallel zur Längsachse vom Verbindungsadapter 63 in den Zwischenadapter 62 verlaufende Verbindungsstifte (nicht dargestellt) verdrehsicher gekoppelt.

An dem dem Flansch 61.1 entgegengesetzten Ende ist endseitig ein Abschlusselement 64 auf das Ankerelement aufgeschoben. Dieses ist in axialer Richtung durch 2 Paare von diametral gegenüberliegenden Stiften 64.1, 64.2 auf dem Ankerelement fixiert. Die Stiftpaare 64.1, 64.2 ragen hierfür aus Bohrungen im dem Abschlusselement bis in korrespondierende Bohrungen in der Wandung des Ankerelements 61.

Der Flansch 61.1 verfügt an seinem dem Zwischenadapter 62 zugewandten Bereich zudem über eine nach aussen gewölbte kugelzonenförmige Kontaktfläche 61.2, welche komplementär ausgebildet ist zu der endseitig am Zwischenadapter 62 ausgebildeten Kontaktfläche 62.4. Ebenso verfügt der Verbindungsadapter 63 an seinem dem Abschlusselement 64 zugewandten Bereich über eine nach innen gewölbte kugelzonenförmige Kontaktfläche 61.2, welche komplementär ausgebildet ist zu der endseitig am Abschlusselement 64 ausgebildeten Kontaktfläche 64.3.

Der Innendurchmesser des Zwischenadapters 62 und der Innendurchmesser des Verbindungsadapters 63 sind grösser gewählt als der Aussendurchmesser des Ankerelements 61 in denjenigen Bereichen, in welchen Zwischenadapter 62 und Verbindungsadapter 63 auf dem Ankerelement 61 vorliegen. Das Spiel gegenüber dem Ankerelement 61 ist dabei insbesondere derart bemessen, dass sich die Längsachse des Zwischenadapters 62 und die Längsachse des Verbindungsadapters 63 um wenige hundertstel Grad, beispielsweise um 0.1 - 0.2°, gegenüber der Längsachse des Ankerelements61 bewegen lassen.

Die axiale Fixierung des Zwischenadapters 62 und des Verbindungsadapters 63 ist dabei derart ausgebildet, dass nebst dem radialen Spiel auch in axialer Richtung ein Spiel vorliegt. Das Spiel beträgt z.B. 0.1 - 0.5%, bezogen auf die Gesamtlänge des Ankerelements 61.

Damit funktioniert der Zugrohradpater 60 als Wellenkupplung, welche zum Übertragen von axialen Kräften und zugleich zum Ausgleich eines Parallelversatzes und/oder eines Winkelversatzes zwischen Antriebsspindel und Futterkörper 10 bzw. Spannfutter 100 ausgelegt ist.

Fig. 13 zeigt ein erfindungsgemässes Spannfutter 100 in montiertem Zustand. Dabei ist der Futterkörper 10 aus den Fig. 1 und 2 mit seinen hohlzylindrischen Stutzen 18 in der durchgehenden Ausnehmung 24 des Basiskörpers 20 aus den Fig. 3 - 4 geführt. In jeder der schräg eingebrachten Ausnehmungen 14.1 - 14.6 des Futterkörpers 10 liegt je ein Spannbolzen 30a, 30b, 30c, 30d, 30e, 30f vor, welcher baugleich ist mit dem in den Fig. 5 - 8 gezeigten Spannbolzen 30. Die hintere Stirnfläche der Spannbolzen 30a, 30b, 30c, 30d, 30e, 30f liegen dabei flächig zwischen den Bohrungen 25.1 - 25.6 auf der vorderen Seite des zylindrischen Abschnitts 21 des Basiskörpers 20 an.

An allen Spannbolzen 30a, 30b, 30c, 30d, 30e, 30f sind spannbolzenseitige Rückhaltelemente 37a, 37b, 37c, 37d, 37e, 37f (teilweise verdeckt in Fig. 13) in Form von seitlich abstehenden Paaren von Stiften angebracht, wie dies in Fig. 13 für den obersten Spannbolzen 30a in Form des obenliegenden Stifts 37a gezeigt ist. Die Stiftpaare liegen dabei in den Bohrungen 32.1, 32.2 am hinteren Ende eines Spannbolzens vor.

Sämtliche Stiftpaare werden jeweils auf beiden Seiten der Spannbolzen durch je ein Paar von spiegelbildlichen, basiskörperseitigen Rückhalteelementen 40a, 50a, 40b, 50b, 40c, 50c, 40d, 50d, 40e, 50e, 40f, 50f (nur teilweise sichtbar in Fig. 13), welche baugleich mit den Rückhaltelementen 40 und 50 gemäss den Fig. 9 und 10 sind, an den Basiskörper 20 gedrückt. Die freien Enden 42.1 der Blattfederelemente drücken dabei mit einer Vorspannung bzw. Federkraft gegen die spannbolzenseitigen Rückhalteelemente 37 bzw. Stifte, so dass die Spannbolzen stets an die Kontaktfläche am Basiskörper 20 angedrückt werden.

Jedes der basiskörperseitigen Rückhalteelemente 40a, 50a, 40b, 50b, 40c, 50c, 40d, 50d, 40e, 50e, 40f, 50f ist mit einer Schraube, welche jeweils durch eine Bohrung 44 geht, in einer der 12 Bohrungen 26.1 - 26.12 am Basiskörper 20 lösbar befestigt.

Bei der in Fig. 13 gezeigten Darstellung ragt das endseitige Abschlusselement 64 des Zugrohradapters 60 teilweise aus dem Stutzen 23 des Basiskörpers 20 heraus.

Zudem liegen in jeder der sechs Bohrungen 25.1 - 25.6 im zylindrischen Abschnitts 21 des Basiskörpers 20 je eine Schraube 90.1, 90.2, 90.3, 90.4 (in Fig. 13 sind nur vier der Schrauben sichtbar) vor, mit welchen das Spannfutter 100 an einer Spindel einer Werkzeugmaschine befestigt werden kann.

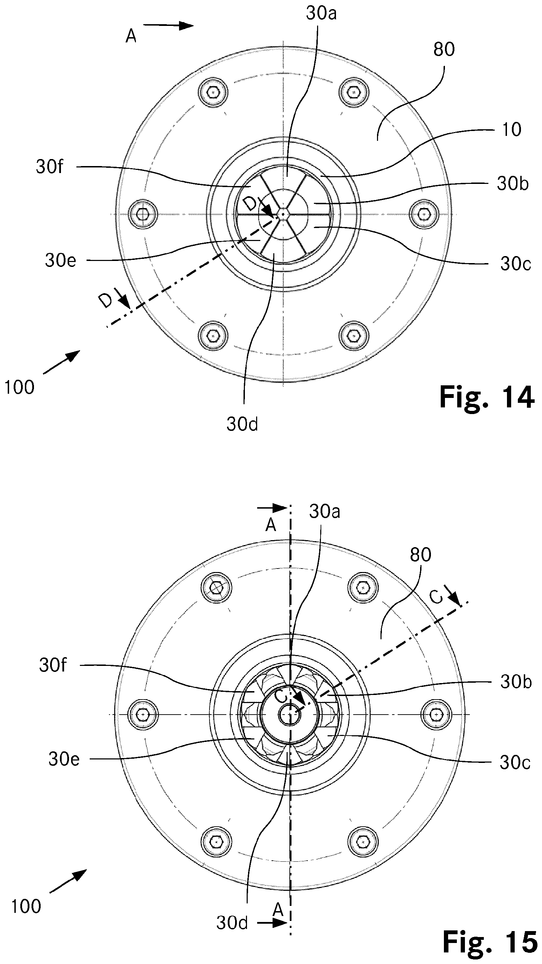

Fig. 14 zeigt das Spannfutter 100 aus Fig. 13 mit einer aufgeschraubten Schutzhülse 80 von vorne entlang der Längsachse in geschlossenem Zustand. Aufgrund der im Wesentlichen kreissektorförmigen Querschnitte der Spannbolzen 30a, 30b, 30c, 30d, 30e, 30f im Bereich der Spannstelle berühren sich sämtliche Spannbolzen des Spannfutters seitlich flächig, so dass ein minimaler Öffnungsdurchmesser der Spannstelle von wenigen Millimetern bleibt.

Fig. 15 zeigt das Spannfutter 100 aus Fig. 14 in offenem Zustand mit maximalem Öffnungsdurchmesser der Spannstelle von mehr als 10 mm.

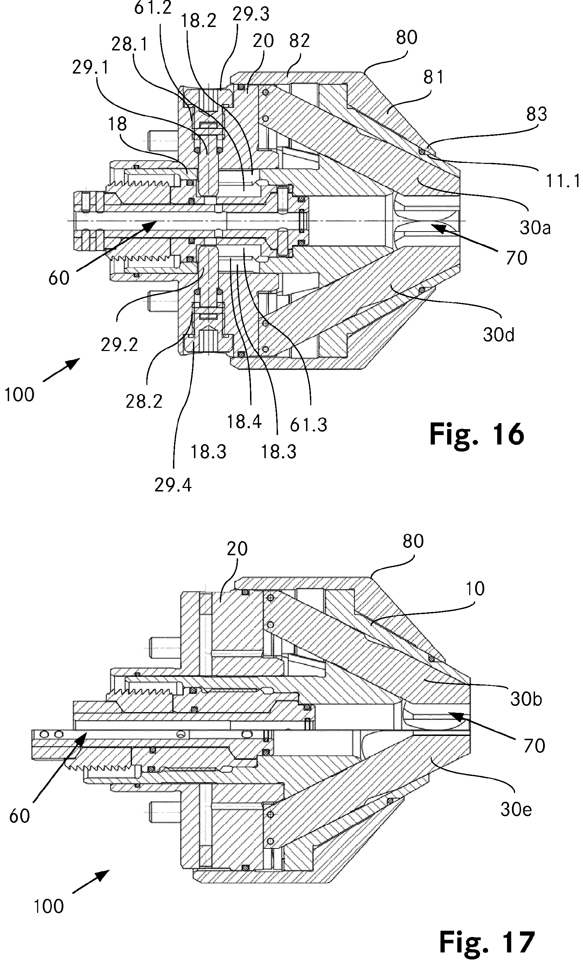

Fig. 16 zeigt einen Schnitt durch das in Fig. 15 gezeigte Spannfutter 100 in offenem Zustand entlang der Linie A-A.

Aus der Darstellung in Fig. 16 ist zu erkennen, dass die Schutzhülse 80 über einen vorderen, konusförmigen Bereich 81 verfügt, welcher den Futterkörper 10 umgibt, sowie einen hinteren, zylindrischen Bereich 82, welcher den zylindrischen Abschnitt 21 des Basiskörpers 20 zumindest teilweise umgibt. Der Bereich der vorderen Öffnung 83 der Schutzhülse 80 liegt dabei auf einer Dichtung auf dem umlaufenden Absatz 11.1 des Futterkörpers 20 auf.

Im Bereich des vorderen Endes (in Fig. 14 auf der rechten Seite) bilden die insgesamt sechs Spannbolzen 30a, 30b, 30c, 30d, 30e, 30f (in Fig. 14 sind nur zwei Spannbolzen sichtbar) die Spannstelle 70 des Spannfutters. Die Spannstelle weist eine Konizität von ca. 8" auf.

Im Innern des hohlzylindrischen Stutzens 18 des Futterkörpers 10 ist des Weiteren der Zugrohradapter 60 aus den Fig. 11 - 12 im Innengewinde 18.4 festgeschraubt. Durch die Bohrungen 28.1, 28.2 des Basiskörpers 20 ragt je ein Stift 29.1, 29.2 durch die Langlöcher 18.2, 18.3 des Futterkörpers 10 bis in die Vertiefungen 61.2, 61.3 des Zugrohradapters 60. Die Stifte 29.1, 29.2 werden durch Schrauben 29.3, 29.4 fixiert.

Fig. 17 zeigt in der oberen Hälfte einen Schnitt des geöffneten Spannfutters 100 aus Fig. 15 entlang der Linie C-C. In der unteren Hälfte ist ein Schnitt desselben Spannfutters 100 in geschlossenem Zustand entlang der Linie D-D in Fig. 14 gezeigt.

Das Spannfutter 100 kann geöffnet werden, indem der Futterkörper 10 in axialer Richtung über den Zugrohradapter 60 nach vorne bewegt wird. Dadurch werden die Spannbolzen 30a - 30f in radialer Richtung von der Längsmittelachse weg bewegt. Der Schliessvorgang funktioniert entsprechend durch eine Bewegung des Futterkörpers 10 nach hinten. Gut erkennbar in Fig. 17 ist, dass dabei die Position der vorderen Enden der Spannbolzen 30b, 30e bzw. der vorderen Stirnflächen unabhängig vom Öffnungszustand der Spannstelle und unabhängig von der Position des Futterkörpers 10 stets in derselben Ebene liegen, welche stets in einem fixen Abstand zum Basiskörper vorliegt.

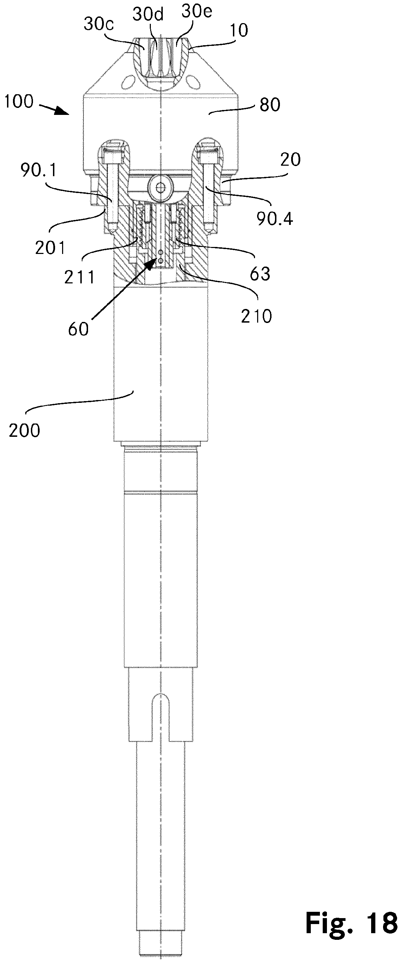

Fig. 18 zeigt das an einer Spindel 200 einer Werkzeugmaschine montierte Spannfutter 100 aus den Fig 15 in geöffnetem Zustand in einer Aufsicht mit abschnittsweisen Längsschnittdarstellungen auf der Höhe der Längsmittelachse. Hierbei ist der Basiskörper 20 durch die sechs Schrauben 90.1, 90.2 (es sind in Fig. 18 lediglich zwei Schrauben gezeigt) welche durch die sechs Bohrungen 25.1 - 25.6 im zylindrischen Abschnitts 21 des Basiskörpers 20 geführt werden, am stirnseitigen Ende 201 der Spindel 200 befestigt. Die Zugstange 210 der Werkzeugmaschine verfügt am vorderen Ende über ein Kupplungselement 211 in Form eines Innengewindes, welches auf dem Verbindungsadapter 63 des Zugrohradapters 60 aufgeschraubt ist. Aufgrund der Toleranzen im Zugrohradapter 60 kann ein Parallelversatz und/oder ein Winkelversatz zwischen Zugrohr 210 und Futterkörper 10 bzw. Spannfutter 100 kompensiert werden.

Die vorstehend beschriebene Ausführungsform ist lediglich als illustratives Beispiel zu verstehen, welches im Rahmen der Erfindung beliebig abgewandelt werden kann.

So ist es beispielsweise möglich, anstelle der basiskörperseitigen Rückstellelemente 40 andere Rückstellelemente vorzusehen, welche nicht über ein Federelement verfügen. Dies kann z.B. ein Profilelement mit einer darin eingebrachten Längsnut oder einem Absatz sein. Ebenso ist es möglich, die spannbolzenseitigen Rückstellelemente durch andere Vorsprünge wie z.B. Stege zu ersetzen.

Auch denkbar ist es, den Zugrohradapter 60 anders auszugestalten, z.B. mit einer starren Wellenkupplung, welche keinen Ausgleich von Fluchtungsfehlern ermöglicht.

Des Weiteren können im Innern des Spannfutters bei Bedarf Anschläge zur axialen Positionierung von Werkstücken und/oder Werkzeugen angeordnet werden.

Ebenfalls möglich ist es, das Spannfutter über einen Zwischenflansch an der Antriebsspindel zu befestigen.

Zusammenfassend ist festzustellen, dass ein vorteilhaftes Spannfutter geschaffen wurde, welches sich im Speziellen für zentrisches Spannen von Werkzeugen und/oder Werkstücken eignet. Dies im Besonderen für Hochpräzisionsanwendungen. Das Spannfutter zeichnet sich zudem durch einen relativ geringen Konstruktions- und Wartungsaufwand und eine hohe Präzision aus.

## Patentansprüche

1. Spannfutter (100) zum Einspannen von Werkzeugen und/oder Werkstücken in einer Werkzeugmaschine, insbesondere in einer Werkzeugschleifmaschine, umfassend einen Basiskörper (20), sowie mehrere Spannbolzen (30), welche mit ihren vorderen Enden eine Spannstelle (70) definieren und in einem gegenüber dem Basiskörper (20) beweglichen Futterkörper (10) geführt sind, und wobei die Spannbolzen (30) in Bezug auf die vorgesehene Drehachse des Spannfutters (100) schräg eingebaut sind und der Futterkörper (10) so ausgelegt ist, dass durch eine Axialbewegung des Futterkörpers (10) eine Radialbewegung der Spannbolzen (30) bewirkt wird, so dass die Spannstelle geöffnet und geschlossen werden kann, wobei sich eine axiale Position der vorderen Enden und/oder freien Stirnflächen (35.1) der Spannbolzen (30) nicht ändert, wobei die Spannbolzen (30) zumindest in den Bereichen, in welchen sie im Futterkörper (10) geführt werden, im Wesentlichen kreiszylindrisch ausgebildet sind **dadurch gekennzeichnet, dass** die hinteren Stirnflächen (32.3) der Spannbolzen (30) stets an einer senkrecht zur Drehachse des Spannfutters (100) liegenden Kontaktfläche am Basiskörper (20) anliegen und mittels einer Rückhaltevorrichtung (37a, 40, 50) in radialer Richtung verschiebbar gehalten werden, wobei die Rückhaltevorrichtung derart ausgebildet ist, dass wenigstens ein Spannbolzen mit einer Vorspannkraft in axialer Richtung an die Kontaktfläche gedrückt wird.

2. Spannfutter nach Anspruch 1, **dadurch gekennzeichnet, dass** der Futterkörper (10) über im Wesentlichen kreiszylindrische Ausnehmungen (14.1, 14.2, 14.3) verfügt, in welchen die Spannbolzen (30) verschiebbar geführt sind.

3. Spannfutter nach wenigstens einem der Ansprüche 1 - 2, **dadurch gekennzeichnet, dass** der Futterkörper (10) über einen im Wesentlichen kreiszylindrischen Stutzen (18) verfügt, welcher in einer entsprechenden kreiszylindrischen Ausnehmung (24) des Basiskörpers (20) in axialer Richtung bewegbar gelagert ist.

4. Spannfutter nach wenigstens einem der Ansprüche 1 - 3, **dadurch gekennzeichnet, dass** die Rückhaltevorrichtung derart ausgebildet ist, dass alle Spannbolzen (30) mit einer Vorspannkraft in axialer Richtung an die Kontaktfläche gedrückt werden.

5. Spannfutter nach wenigstens einem der Ansprüche 1 - 4, **dadurch gekennzeichnet, dass** die Rückhaltevorrichtung ein basiskörperseitiges Rückhaltelement (40, 50) umfasst, welches lösbar am Basiskörper (20), insbesondere an der Kontaktfläche, befestigbar ist.

6. Spannfutter nach wenigstens einem der Ansprüche 1 - 5, **dadurch gekennzeichnet, dass** die Rückhaltevorrichtung an wenigstens einem Spannbolzen (30), bevorzugt an jedem Spannbolzen, ein spannbolzenseitiges Rückhalteelement in Form von wenigstens einem am hinteren Ende des Spannbolzens (30) angeordneten und seitlich abragenden Vorsprungs (37a), welcher jeweils von einem an der Kontaktfläche angeordneten basiskörperseitigen Rückhalteelement (40, 50) umgriffen wird, derart dass der Spannbolzen (30) in radialer Richtung bewegbar ist, während er mit der hinteren Stirnfläche in axialer Richtung an der Kontaktfläche gehalten wird.

7. Spannfutter nach wenigstens einem der Ansprüche 1 - 6, **dadurch gekennzeichnet, dass** die Rückhaltevorrichtung ein Federelement (40) umfasst, insbesondere ein Blattfederelement, welches am Basiskörper, insbesondere an der Kontaktfläche, befestigt ist und mit den Spannbolzen (30) zusammenwirkt.

8. Spannfutter nach Anspruch 7, **dadurch gekennzeichnet, dass** das Federelement (40) das spannbolzenseitige Rückhalteelement (37a) umgreift, so dass ein freies Ende (42.1) der Feder (42) des Federelements gegen das spannbolzenseitige Rückhalteelement (37a) und dadurch den Spannbolzen (30) gegen die Kontaktfläche drückt.

9. Spannfutter nach wenigstens einem der Ansprüche 1 - 8, **dadurch gekennzeichnet, dass** die Spannbolzen (30) derart im Futterkörper (10) geführt sind, dass Sperrluft zwischen Spannbolzen (30) und Futterkörper (10) durchleitbar ist.

10. Spannfutter nach Anspruch 9, **dadurch gekennzeichnet, dass** in den kreiszylindrischen Bereichen (31) der Spannbolzen (30) eine Längsabflachung (31.1) eingebracht ist, insbesondere so dass zwischen Spannbolzen (30) und Futterkörper (10) jeweils ein Freiraum bleibt, bevorzugt so, dass in diesen Bereichen Sperrluft entlang den Spannbolzen (30) geleitet und im Bereich der vorderen Enden der Spannbolzen austreten kann.

11. Spannfutter nach wenigstens einem der Ansprüche 9 - 10, **dadurch gekennzeichnet, dass** im Basiskörper (20) und/oder im Futterkörper (10) Fluidkanäle vorliegen, so dass Sperrluft aus einem Innenbereich des Futterkörpers (20) und/oder Basiskörpers (10) in einen Bereich der hinteren Enden (32) der Spannbolzen (30) geführt werden kann.

12. Spannfutter nach wenigstens einem der Ansprüche 1 - 11, **dadurch gekennzeichnet, dass** die Spannstelle (70) eine Konizität aufweist, insbesondere um die beim Spannen auftretenden Aufkippmomente auszugleichen.

13. Spannfutter nach wenigstens einem der Ansprüche 1 - 12, **dadurch gekennzeichnet, dass** ein Zugrohradapter (60) vorliegt, welcher eine mechanische Schnittstelle zwischen dem Futterkörper (10) und dem Zugrohr (210) einer Werkzeugmaschine bilden kann und wobei der Zugrohradapter (60) eine Wellenkupplung umfasst, welche zum Übertragen von axialen Kräften und zugleich zum Ausgleich eines Parallelversatzes und/oder eines Winkelversatzes zwischen Zugrohr (210) und Spannfutter ausgelegt ist.

14. Spannfutter nach Anspruch 13, **dadurch gekennzeichnet, dass** der Zugrohradapter (60) ein zylindrisches oder hohlzylindrisches Ankerelement (61) umfasst, auf welchem ein Zwischenadapter (62) in Form einer ersten hohlzylindrischen Hülse zum Ankoppeln an das Spannfutter sowie ein Verbindungsadapter (63) in Form einer zweiten hohlzylindrischen Hülse zum Ankoppeln an ein Zugrohr einer Werkzeugmaschine angeordnet sind, wobei Ankerelement (61), Zwischenadapter (62) und Verbindungsadapter (63) derart dimensioniert sind, dass zwischen Ankerelement (61) und Verbindungsadapter (62) sowie zwischen Ankerelement (61) und Zwischenadapter (62) in radialer Richtung ein Spiel vorliegt.

## Claims

1. Chuck (100) for clamping tools and/or workpieces in a machine tool, in particular in a tool grinding machine, comprising a main body (20) as well as a plurality of clamping pins (30) which by way of the front ends thereof define a clamping location (70) and are guided in a chuck body (10) that is movable in relation to the main body (20), and wherein the clamping pins (30) are installed so as to be oblique in relation to the envisaged rotation axis of the chuck (100), and the chuck body (10) is conceived such that a radial movement of the clamping pins (30) is caused by an axial movement of the chuck body (10) such that the clamping location can be opened and closed, wherein an axial position of the front ends and/or free end faces (35.1) of the clamping pins (30) is not changed, wherein the clamping pins (30), at least in the regions in which the latter are guided in the chuck body (10), are configured so as to be substantially circular-cylindrical,
**characterized in that**
the rear end faces (32.3) of the clamping pins (30) at all times bear on a contact face on the main body (20) that lies so as to be perpendicular to the rotation axis of the chuck (100), and by means of a retention device (37a, 40, 50) are held so as to be displaceable in the radial direction, wherein the retention device is configured in such a manner that at least one clamping pin by way of a pretensioning force is pushed in the axial direction onto the contact face.

2. Chuck according to Claim 1, **characterized in that** the chuck body (10) possesses substantially circular-cylindrical recesses (14.1, 14.2, 14.3), the clamping pins (30) being guided so as to be displaceable in said circular-cylindrical recesses (14.1, 14.2, 14.3).

3. Chuck according to at least one of Claims 1 to 2,
**characterized in that** the chuck body (10) has a substantially circular-cylindrical stub (18) which is mounted so as to be movable in the axial direction in a corresponding circular-cylindrical recess (24) of the main body (20).

4. Chuck according to at least one of Claims 1 to 3,
**characterized in that** the retention device is configured in such a manner that all clamping pins (30) by way of a pretensioning force are pushed in the axial direction onto the contact face.

5. Chuck according to at least one of Claims 1 to 4,
**characterized in that** the retention device comprises a main-body-proximal retention element (40, 50) which is able to be releasably fastened to the main body (20), in particular to the contact face.

6. Chuck according to at least one of Claims 1 to 5,
**characterized in that** the retention device on at least one clamping pin (30), preferably on each clamping pin, a clamping-pin-proximal retention element in the form of at least one laterally protruding protrusion (37a) which is disposed on the rear end of the clamping pin (30) and which by a main-body-proximal retention element (40, 50) that is disposed on the contact face is in each case encompassed in such a manner that the clamping pin (30) is movable in the radial direction while said clamping pin (30) by way of the rear end face is held in the axial direction on the contact face.

7. Chuck according to at least one of Claims 1 to 6,
**characterized in that** the retention device comprises a spring element (40), in particular a leaf-spring element, which is fastened to the main body, in particular to the contact face, and interacts with the clamping pin (30).

8. Chuck according to Claim 7, **characterized in that** the spring element (40) encompasses the clamping-pin-proximal retention element (37a) such that a free end (42.1) of the spring (42) of the spring element pushes against the clamping-pin-proximal retention element (37a) and, on account thereof, pushes the clamping pin (30) against the contact face.

9. Chuck according to at least one of Claims 1 to 8,
**characterized in that** the clamping pins (30) are guided in the chuck body (10) in such a manner that barrier air can be directed between the clamping pin (30) and the chuck body (10).

10. Chuck according to Claim 9, **characterized in that** a longitudinal flat spot (31.1) is incorporated in the circular-cylindrical regions (31) of the clamping pins (30), in particular such that a void remains in each case between the clamping pin (30) and the chuck body (10), preferably such that barrier air in these regions can be directed along the clamping pins (30) and can exit in the region of the front ends of the clamping pins.

11. Chuck according to at least one of Claims 9 to 10,
**characterized in that** fluid ducts are present in the main body (20) and/or in the chuck body (10) such that barrier air from an internal region of the chuck body (20) and/or the main body (10) can be guided into a region of the rear ends (32) of the clamping pins (30).

12. Chuck according to at least one of Claims 1 to 11,
**characterized in that** the clamping location (70) has a conicity, in particular for compensating the tilting moments that arise when clamping.

13. Chuck according to at least one of Claims 1 to 12,
**characterized in that** a draw tube adapter (60) which can form a mechanical interface between the chuck body (10) and the draw tube (210) of a machine tool is present, and wherein the draw tube adapter (60) comprises a shaft coupling which is conceived for transmitting axial forces and simultaneously for compensating a parallel offset and/or an angular offset between the draw tube (210) and the chuck.

14. Chuck according to Claim 13, **characterized in that** the draw tube adapter (60) comprises a cylindrical or hollow-cylindrical anchor element (61) on which an intermediate adapter (62) in the form of a first hollow-cylindrical sleeve for coupling to the chuck as well as a connecting adapter (63) in the form of a second hollow-cylindrical sleeve for coupling to a draw tube of a machine tool are disposed, wherein the anchor element (61), the intermediate adapter (62) and the connecting adapter (63) are dimensioned in such a manner that a clearance in the radial direction is present between the anchor element (61) and the connecting adapter (62) as well as between the anchor element (61) and the intermediate adapter (62) .

## Revendications

1. Mandrin (100) destiné à serrer des outils et/ou des pièces dans une machine-outil, en particulier dans une affûteuse d'outils, ledit mandrin comprenant un corps de base (20) et une pluralité de boulons de serrage (30) qui définissent avec leurs extrémités avant un point de serrage (70) et qui sont guidés dans un corps de mandrin (10) mobile par rapport au corps de base (20), et les boulons de serrage (30) étant incorporés obliquement par rapport à l'axe de rotation prévu du mandrin (100) et le corps de mandrin (10) étant conçu de telle sorte qu'un mouvement radial des boulons de serrage (30) soit généré par un mouvement axial du corps de mandrin (10), de façon à pouvoir ouvrir et fermer le point de serrage, la position axiale des extrémités avant et/ou des faces frontales libres (35.1) des boulons de serrage (30) ne variant pas, les boulons de serrage (30) étant sensiblement en forme de cylindre circulaire, au moins dans les zones où ils sont guidés dans le corps de mandrin (10), **caractérisé en ce que** les faces frontales arrière (32.3) des boulons de serrage (30) sont toujours en appui sur une surface de contact, perpendiculaires à l'axe de rotation du mandrin (100),au niveau du corps de base (20) et sont maintenues de manière coulissante dans la direction radiale au moyen d'un dispositif de retenue (37a, 40, 50), le dispositif de retenue étant conçu de telle manière qu'au moins un boulon de serrage soit pressé contre la surface de contact avec une force de précontrainte dans la direction axiale.

2. Mandrin selon la revendication 1, **caractérisé en ce que** le corps de mandrin (10) comporte des évidements (14.1, 14.2, 14.3) sensiblement en forme de cylindre circulaire dans lesquels les boulons de serrage (30) sont guidés de manière coulissante.

3. Mandrin selon l'une au moins des revendications 1 et 2, **caractérisé en ce que** le corps de mandrin (10) comporte une tubulure (18) sensiblement en forme de cylindre circulaire qui peut être montée de manière mobile dans la direction axiale dans un évidement correspondant (24) en forme de cylindre circulaire du corps de base (20).

4. Mandrin selon l'une au moins des revendications 1 à 3, **caractérisé en ce que** le dispositif de retenue est conçu de telle sorte que tous les boulons de serrage (30) soient pressés contre la surface de contact avec une force de précontrainte dans la direction axiale.

5. Mandrin selon l'une au moins des revendications 1 à 4, **caractérisé en ce que** le dispositif de retenue comprend un élément de retenue (40, 50) du côté corps de base qui peut être fixé de manière amovible au corps de base (20), en particulier à la surface de contact.

6. Mandrin selon l'une au moins des revendications 1 à 5, **caractérisé en ce que** le dispositif de retenue sur au moins un boulon de serrage (30), de préférence sur chaque boulon de serrage, un élément de retenue côté boulon de serrage se présentant sous la forme d'au moins une saillie (37a) disposée à l'extrémité arrière du boulon de serrage (30), se projetant latéralement et entourée à chaque fois par un élément de retenue (40, 50) côté corps de base disposé sur la surface de contact de telle sorte que le boulon de serrage (30) puisse être déplacé dans la direction radiale, tandis qu'il est maintenu, avec sa surface frontale arrière, sur la surface de contact dans la direction axiale.

7. Mandrin selon l'une au moins des revendications 1 à 6, **caractérisé en ce que** le dispositif de retenue comprend un élément à ressort (40), en particulier un élément à ressort à lame, qui est fixé au corps de base, en particulier à la surface de contact, et qui coopère avec le boulon de serrage (30).

8. Mandrin selon la revendication 7, **caractérisé en ce que** l'élément à ressort (40) s'engage autour de l'élément de retenue (37a) côté boulon de serrage, de sorte qu'une extrémité libre (42.1) du ressort (42) de l'élément à ressort presse contre l'élément de retenue (37a) côté boulon de serrage et presse ainsi le boulon de serrage (30) contre la surface de contact.

9. Mandrin selon l'une au moins des revendications 1 à 8, **caractérisé en ce que** les boulons de serrage (30) sont guidés dans le corps de mandrin (10) de manière que de l'air d'arrêt puisse passer entre le boulon de serrage (30) et le corps de mandrin (10).

10. Mandrin selon la revendication 9, **caractérisé en ce qu'**un aplatissement longitudinal (31.1) est réalisé dans les régions (31) en forme de cylindre circulaire du boulon de serrage (30), notamment de façon à ménager un espace libre entre chaque boulon de serrage (30) et le corps de mandrin (10), de préférence de façon que de l'air d'arrêt soit guidé dans ces zones le long du boulon de serrage (30) et puisse sortir dans la zone des extrémités avant du boulon de serrage.

11. Mandrin selon l'une au moins des revendications 9 et 10, **caractérisé en ce que** des canaux de fluide sont ménagés dans le corps de base (20) et/ou dans le corps de mandrin (10), de sorte que l'air d'arrêt puisse être guidé d'une zone intérieure du corps de mandrin (20) et/ou du corps de base (10) jusque dans une zone des extrémités arrière (32) des boulons de serrage (30).

12. Mandrin selon l'une au moins des revendications 1 à 11, **caractérisé en ce que** le point de serrage (70) présente une conicité, notamment pour compenser les moments de basculement survenant lors du serrage.

13. Mandrin selon l'une au moins des revendications 1 à 12, **caractérisé en ce qu'**un adaptateur de tube de traction (60) est prévu qui peut former une interface mécanique entre le corps de mandrin (10) et le tube de traction (210) d'une machine-outil et l'adaptateur de tube de traction (60) comprenant un accouplement d'arbre qui est conçu pour transmettre des forces axiales et en même temps pour compenser un décalage parallèle et/ou un décalage angulaire entre le tube de traction (210) et le mandrin.

14. Mandrin selon la revendication 13, **caractérisé en ce que** l'adaptateur de tube de traction (60) comprend un élément d'ancrage (61) en forme de cylindre ou de cylindre creux sur lequel sont disposés un adaptateur intermédiaire (62) se présentant sous la forme d'un premier manchon en forme de cylindre creux et destiné à être accouplé au mandrin et un adaptateur de liaison (63) se présentant sous la forme d'un deuxième manchon en forme de cylindre creux et destiné à être accouplé à un tube de traction d'une machine-outil, l'élément d'ancrage (61), l'adaptateur intermédiaire (62) et l'adaptateur de liaison (63) étant dimensionnés de façon à ménager un jeu dans la direction radiale entre l'élément d'ancrage (61) et l'adaptateur de liaison (62) et entre l'élément d'ancrage (61) et l'adaptateur intermédiaire (62).
